# EUROPEAN PATENT SPECIFICATION

(11) **EP 4 090 083 B1**
(45) Date of publication and mention of the grant of the patent: **20.08.2025**
(21) Application number: 20919041.2
(22) Date of filing: 13.02.2020
(51) Int. Cl.: H04W 28/24, H04L 45/85, H04W 12/08, H04W 12/69, H04L 9/40

(54) **COMMUNICATION METHOD, APPARATUS, AND SYSTEM**
KOMMUNIKATIONSVERFAHREN, -VORRICHTUNG UND -SYSTEM
PROCÉDÉ, APPAREIL ET SYSTÈME DE COMMUNICATION

(43) Date of publication of application: 16.11.2022
(73) Proprietor: Huawei Technologies Co., Ltd., Shenzhen, Guangdong 518129, (CN)
(72) Inventor: ZHU, Fangyuan, Shenzhen, Guangdong 518129 (CN)
(74) Representative: Thun, Clemens
(86) International application number: PCT/CN2020/075146
(87) International publication number: WO 2021/159415

(56) References cited:
- CN-A- 110 461 027
- NEC: "Update to Solution #2 Max number of UEs per Network Slice control at registration", vol. SA WG2, no. Incheon, South Korea; 20200113 - 20200117, 7 January 2020 (2020-01-07), XP051842389, Retrieved from the Internet <URL:https://ftp.3gpp.org/tsg_sa/WG2_Arch/TSGS2_136AH_Incheon/Docs/S2-2000317.zip S2-2000317 Updates to Solution #2 Max number of UEs per Network Slice control at registration ver03.doc> [retrieved on 20200107]
- ERICSSON: "Update to Solution 2", vol. SA WG2, no. Incheon, Korea; 20200113 - 20200117, 7 January 2020 (2020-01-07), XP051842280, Retrieved from the Internet <URL:https://ftp.3gpp.org/tsg_sa/WG2_Arch/TSGS2_136AH_Incheon/Docs/S2-2000176.zip S2-2000176_Update_Solution #2.doc> [retrieved on 20200107]
- NEC: "Solution KI#1: Max number of UEs per Network Slice control at registration", vol. SA WG2, no. Reno, USA; 20191118 - 20191122, 22 November 2019 (2019-11-22), XP051828404, Retrieved from the Internet <URL:https://ftp.3gpp.org/Meetings_3GPP_SYNC/SA2/Docs/S2-1912476.zip S2-1912476_wasS2-1911348 Solution KI#1 Max number of UEs per Network Slice control at registration ver03.doc> [retrieved on 20191122]
- "3rd Generation Partnership Project; Technical Specification Group Services and System Aspects; Study on Enhancement of Network Slicing Phase 2 (Release 17)", no. V0.3.0, 30 January 2020 (2020-01-30), pages 1 - 62, XP051860861, Retrieved from the Internet <URL:ftp://ftp.3gpp.org/Specs/archive/23_series/23.700-40/23700-40-030.zip 23700-40-030_RM.docx> [retrieved on 20200130]
- ANONYMOUS: "3rd Generation Partnership Project; Technical Specification Group Services and System Aspects; System architecture for the 5G System (5GS); Stage 2 (Release 16)", vol. SA WG2, no. V16.3.0, 22 December 2019 (2019-12-22), pages 1 - 417, XP051840930, Retrieved from the Internet <URL:ftp://ftp.3gpp.org/Specs/archive/23_series/23.501/23501-g30.zip 23501-g30.docx> [retrieved on 20191222]
- "3rd Generation Partnership Project; Technical Specification Group Services and System Aspects; Study on enhancement of network slicing; Phase 2 (Release 17)", 3GPP DRAFT; 23700-40-030, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 30 January 2020 (2020-01-30), Mobile Competence Centre ; 650, route des Lucioles ; F-06921 Sophia-Antipolis Cedex ; France, XP051845772
- NEC: "Update to Solution #2 Max number of UEs per Network Slice control at registration", 3GPP DRAFT; S2-2000317, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Incheon, South Korea; 20200113 - 20200117, 7 January 2020 (2020-01-07), Mobile Competence Centre ; 650, route des Lucioles ; F-06921 Sophia-Antipolis Cedex ; France, XP051842389

## Description

### TECHNICAL FIELD

This application relates to the field of communication technologies, and in particular, to a communication method, apparatus, and system.

### BACKGROUND

When a terminal device registers with a network, in addition to performing a primary authentication process (also referred to as a primary authentication process) of a permanent identifier of the terminal device, the network may further determine, based on network slice selection assistance information (network slice selection assistance information, NSSAI) requested by the terminal device and subscription data of the terminal device, whether a network slice specific authentication and authorization (Network Slice Specific Authentication and Authorization, NSSAA) process needs to be performed. The process may also be referred to as a secondary authentication process or a secondary authentication process for a network slice. For a network slice whose NSSAA fails, the network rejects access of the terminal device.

To ensure a service level agreement (service level agreement, SLA) of the network slice, statistics collection and control of a network slice quota (Network slice quota) need to be further implemented. The statistics collection and control of the network slice quota include: collecting statistics about and controlling a quantity of users that use a specific network slice for access, to ensure that the quantity does not exceed a maximum quantity of users allowed by the network slice.

For a network slice, there may be a scenario in which both NSSAA and user counting need to be performed on the network slice. When the terminal device registers with the network, if both NSSAA and user counting need to be performed on a network slice that the terminal device requests to access, a problem of how to accurately determine whether to allow access of the terminal device to the network slice needs to be resolved.

The documents NEC: "Update to solution #2 max number of UEs per network slice control address registration", XP 051842389 shows a communication method for network slice management. Especially, it is shown to perform a user count on a slice and to determine of this user count exceeds a threshold. Moreover, D1 shows controlling access to the slice based upon the user count number exceeding the threshold, or not.

### SUMMARY

The present invention is defined by the independent claims. Further advantageous developments are shown by the dependent claims.

This application provides a communication method, apparatus, and system, to accurately determine whether to allow access of a terminal device to a network slice on which both NSSAA and user counting need to be performed.

### BRIEF DESCRIPTION OF DRAWINGS

FIG. 1A is a schematic diagram of a 5G network architecture based on a service-oriented architecture;
FIG. 1B is a schematic diagram of a 5G network architecture based on a point-to-point interface;
FIG. 2 is a schematic flowchart of a communication method according to this application;
FIG. 3 is a schematic flowchart of another communication method according to this application;
FIG. 4 is a schematic flowchart of another communication method according to this application;
FIG. 5 is a schematic flowchart of another communication method according to this application;
FIG. 6 is a schematic flowchart of another communication method according to this application;
FIG. 7 is a schematic diagram of a communication apparatus according to this application;
FIG. 8 is a schematic diagram of another communication apparatus according to this application; and
FIG. 9 is a schematic diagram of another communication apparatus according to this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment.

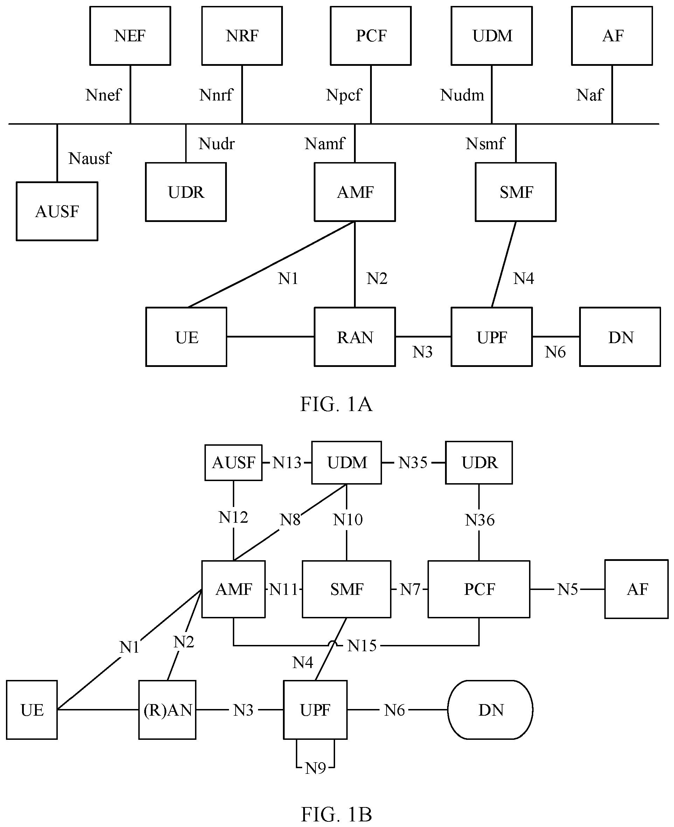

FIG. 1A is a schematic diagram of a 5th generation (5th generation, 5G) network architecture based on a service-oriented architecture. The 5G network architecture shown in FIG. 1A may include three parts: a terminal device, a data network (data network, DN), and a carrier network. The following briefly describes functions of some network elements.

The carrier network may include one or more of the following network elements: an authentication server function (Authentication Server Function, AUSF) network element, a network exposure function (network exposure function, NEF) network element, a policy control function (policy control function, PCF) network element, a unified data management (unified data management, UDM) network element, a unified data repository (Unified Data Repository, UDR), a network repository function (Network Repository Function, NRF) network element, an application function (application function, AF) network element, an access and mobility management function (access and mobility management function, AMF) network element, a session management function (session management function, SMF) network element, a radio access network (radio access network, RAN), a user plane function (user plane function, UPF) network element, a network slice selection function (Network Slice Selection Function, NSSF) network element (not shown in the figure), and the like. In the foregoing carrier network, parts other than the radio access network may be referred to as core network parts.

The terminal device (terminal device) is a device having a wireless transceiver function. The terminal device may be deployed on land, and includes an indoor device, an outdoor device, a handheld device, or a vehicle-mounted device; or may be deployed on a water surface (for example, on a ship); or may be deployed in the air (for example, on an airplane, a balloon, or a satellite). The terminal device may be a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), or the like.

The terminal device may establish a connection with the carrier network through an interface (for example, N1) provided by the carrier network, and use services such as a data service and/or a voice service provided by the carrier network. The terminal device may further access the DN through the carrier network, and use a carrier service deployed on the DN and/or a service provided by a third party. The third party may be a service provider other than the carrier network and the terminal device, and may provide services such as a data service and/or a voice service for the terminal device. A specific representation form of the third party may be specifically determined based on an actual application scenario, and is not limited herein.

The RAN is a sub-network of the carrier network, and is an implementation system between a service node in the carrier network and the terminal device. To access the carrier network, the terminal device first passes through the RAN, and may be connected to the service node in the carrier network through the RAN. A RAN device is a device that provides a wireless communication function for the terminal device, and the RAN device is also referred to as an access network device. The RAN device includes but is not limited to: a next generation NodeB (g nodeB, gNB), an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved nodeB or a home node B, HNB), a baseband unit (baseBand unit, BBU), a transmission reception point (transmitting and receiving point, TRP), a transmission point (transmitting point, TP), a mobile switching center, and the like in 5G.

The AMF network element mainly performs functions such as mobility management, and access authentication/authorization. In addition, the AMF network element is further responsible for transferring a user policy between UE and a PCF.

The SMF network element mainly performs functions such as session management, execution of a control policy delivered by a PCF, UPF selection, and UE internet protocol (internet protocol, IP) address assignment.

The UPF network element serves as an interface UPF of the data network, and implements functions such as user plane data forwarding, session/flow-based charging statistics, and bandwidth throttling.

The UDM network element is mainly responsible for functions such as subscription data management and user access authorization.

The UDR is mainly responsible for a function of accessing data of types such as subscription data, policy data, and application data.

The NEF network element is mainly configured to support capability and event exposure.

The AF network element mainly transfers a requirement of an application side on a network side, for example, a quality of service (Quality of Service, QoS) requirement or user status event subscription. The AF may be a third-party functional entity, or may be an application service deployed by a carrier, for example, an IP multimedia subsystem (IP Multimedia Subsystem, IMS) voice call service.

The PCF network element is mainly responsible for policy control functions such as session-level or service flow-level charging, QoS bandwidth guarantee and mobility management, and UE policy decision. In this architecture, PCFs connected to the AMF and the SMF are separately an AM PCF (PCF for Access and Mobility Control) and an SM PCF (PCF for Session Management). In an actual deployment scenario, the PCFs may not be a same PCF entity.

The NRF network element may be configured to provide a network element discovery function and provide, based on a request from another network element, network element information corresponding to a network element type. The NRF further provides a network element management service, for example, registration, update, and deregistration of a network element and subscription and push of a network element status.

The AUSF network element is mainly responsible for user authentication, to determine whether to allow a user or a device to access a network.

The NSSF network element is mainly configured to: select a network slice, perform user counting on the network slice, and so on.

The DN is a network outside the carrier network. The carrier network may access a plurality of DNs. A plurality of services may be deployed on the DN, and the DN may provide services such as a data service and/or a voice service for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like on the internal office network of the company.

In FIG. 1A, Nausf, Nnef, Npcf, Nudm, Naf, Namf, Nsmf, N1, N2, N3, N4, and N6 are interface serial numbers. For meanings of these interface sequence numbers, refer to meanings defined in the 3rd generation partnership project (3rd generation partnership project, 3GPP) standard protocol. This is not limited herein.

FIG. 1B is a schematic diagram of a 5G network architecture based on a point-to-point interface. For descriptions of functions of network elements in FIG. 1B, refer to descriptions of functions of corresponding network elements in FIG. 1A. Details are not described again. A main difference between FIG. 1B and FIG. 1A lies in that interfaces between network elements in FIG. 1B are point-to-point interfaces rather than service-oriented interfaces.

In the architecture shown in FIG. 1B, names and functions of the interfaces between the network elements are as follows:
(1) N7 represents an interface between the PCF and the SMF, and may be configured to deliver a protocol data unit (protocol data unit, PDU) session granularity control policy and a service data flow granularity control policy.
(2) N15 represents an interface between the PCF and the AMF, and may be configured to deliver a UE policy and an access control related policy.
(3) N5 represents an interface between the AF and the PCF, and may be configured to deliver an application service request and report a network event.
(4) N4 represents an interface between the SMF and the UPF, and may be configured to transfer information between a control plane and a user plane, including delivery of forwarding rules, QoS control rules, traffic statistics rules, and the like from the control plane to the user plane, and reporting of user plane information.
(5) N11 represents an interface between the SMF and the AMF, and may be configured to: transfer PDU session tunnel information between the RAN and the UPF, transfer a control message to be sent to the UE, transfer radio resource control information to be sent to the RAN, and the like.
(6) N2 represents an interface between the AMF and the RAN, and may be configured to transfer radio bearer control information and the like from a core network side to the RAN.
(7) N1 represents an interface between the AMF and the UE, and may be configured to transfer the QoS control rules and the like to the UE.
(8) N8 represents an interface between the AMF and the UDM, and may be used by the AMF to obtain, from the UDM, subscription data and authentication data related to access and mobility management, and used by the AMF to register current mobility management related information of the UE with the UDM.
(9) N10 represents an interface between the SMF and the UDM, and may be used by the SMF to obtain, from the UDM, subscription data related to session management, and used by the SMF to register current session related information of the UE with the UDM.
(10) N35 represents an interface between the UDM and the UDR, and may be used by the UDM to obtain user subscription data information from the UDR.
(11) N36 represents an interface between the PCF and the UDR, and may be used by the PCF to obtain policy related subscription data and application data related information from the UDR.
(12) N12 represents an interface between the AMF and the AUSF, and may be used by the AMF to initiate an authentication process to the AUSF, where an SUCI may be carried as a subscription identifier.
(13) N13 represents an interface between the UDM and the AUSF, and may be used by the AUSF to obtain a user authentication vector from the UDM, to perform an authentication process.

It may be understood that the network elements or the functions may be network elements in a hardware device, software functions running on dedicated hardware, or virtualized functions instantiated on a platform (for example, a cloud platform). Optionally, the foregoing network elements or the functions may be implemented by one device, may be jointly implemented by a plurality of devices, or may be one function module in one device. This is not specifically limited in embodiments of this application.

The mobility management network element, the session management network element, the policy control network element, the application function network element, the access network device, the network exposure function network element, the user plane network element, and the network slice selection network element in this application may be respectively the AMF, the SMF, the PCF, the AF, the RAN, the NEF, the UPF, and the NSSF in FIG. 1A or FIG. 1B, or may be network elements that have functions of the AMF, the SMF, the PCF, the AF, the RAN, the NEF, the UPF, and the NSSF in future communication such as a 6th generation (6th generation, 6G) network. This is not limited in this application. For ease of description, in this application, descriptions are provided by using an example in which the mobility management network element, the session management network element, the policy control network element, the application function network element, the access network device, the network exposure function network element, the user plane network element, and the network slice selection network element are respectively the AMF, the SMF, the PCF, the AF, the RAN, the NEF, the UPF, and the NSSF. Further, in this application, an example in which the terminal device is the UE is used for description.

In the 5G era, hundreds of billions of internet of things devices access a network, different types of application scenarios have different requirements on the network, and requirements of some of the scenarios may even conflict. If a single network is used to provide services for different types of application scenarios, a network architecture is extremely complex, and network management efficiency and resource utilization are low. In a 5G network slicing technology, independent logical networks are virtualized on a same network infrastructure, to provide network environments isolated from each other for different application scenarios, so that network functions and features can be customized for the different application scenarios based on respective requirements, and QoS requirements of different services can be effectively ensured. An objective of 5G network slicing is to organically combine terminal devices, access network resources, core network resources, and network O&M and management systems to provide a complete network that can be independently maintained and isolated for different business scenarios or service types.

Various scenarios pose different requirements on the 3GPP ecosystem, such as charging, policy, security, and mobility. The 3GPP emphasizes that network slices do not affect each other. For example, a large quantity of burst meter reading services should not affect normal mobile broadband services. To meet diversified requirements and slice isolation, independent management and operation and maintenance are required for services, and customized service functions and analysis capabilities are provided. Instances of different service types are deployed on different network slices, and instances of a same service type may also be deployed on different network slices.

When the network slice is deployed in a core network, if a user initially attaches to the network, a network slice selection process is triggered. The network slice selection process depends on subscription data of the user, local configuration information, a roaming protocol, an operator policy, and the like. In the network slice selection process, the foregoing parameters need to be comprehensively considered to select an optimal slice type for UE.

When UE needs to access a specific network slice, the UE may provide a requested (Requested) NSSAI to the core network, so that the core network selects a network slice example for the UE.

In a 5G network, when UE needs to use a network service, the UE needs to register with the network first. A registration process is classified into the following scenarios:
(1) Initial registration to the 5G network;
(2) Mobility registration update when the UE has moved out of an original registration area; and
(3) Periodic registration update.

During registration, one or more PDU sessions may be established. For example, if the UE has to send uplink data in the mobility registration update process, a PDU session is established in the registration process.

When the UE registers with the network, in addition to performing a primary authentication process (also referred to as a primary authentication process) of a permanent identifier of the UE, the network may further determine, based on NSSAI requested by the UE and subscription data of the UE, whether to perform an NSSAA process. The process may also be referred to as a secondary authentication process or a secondary authentication process of a network slice.

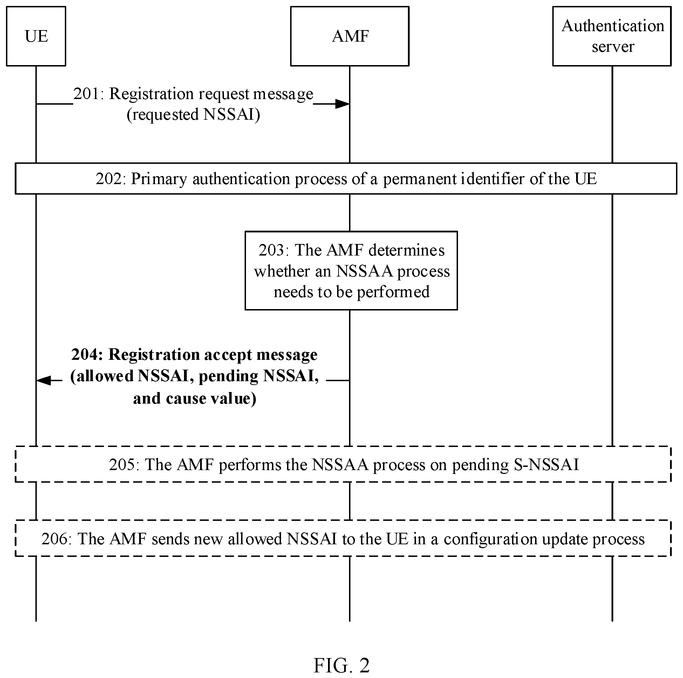

FIG. 2 is a schematic diagram of an NSSAA process. The process includes the following steps.

Step 201: UE initiates a registration process, and sends a registration request (Registration Request) message to an AMF, where the registration request message carries requested NSSAI (Requested NSSAI).

Step 202: The AMF performs a primary authentication process of a permanent identifier of the UE, and after the process succeeds, the AMF obtains subscription data of the UE from a UDM. The subscription data includes S-NSSAI to which the UE subscribes and indication information corresponding to each piece of S-NSSAI. The indication information indicates whether NSSAA needs to be performed on the S-NSSAI. The subscribed S-NSSAI refers to a slice type (HPLMN S-NSSAI) of a home domain network in which the UE is located. For example, the subscribed S-NSSAI and the indication information in the subscription data of the UE are shown in Table 1.

**Table 1**

| Subscribed S-NSSAI | Indication information: whether NSSAA needs to be performed on the S-NSSAI |
|---|---|
| S-NSSAI-1 | Yes |
| S-NSSAI-2 | No |

Step 203: The AMF determines whether an NSSAA process needs to be performed.

It should be noted that, in the present invention, that the AMF determines that NSSAA needs to be performed on the S-NSSAI in the requested NSSAI may have two meanings:
Meaning 1: If specific S-NSSAI in the requested NSSAI belongs to the subscribed S-NSSAI, and NSSAA needs to be performed on the subscribed S-NSSAI, the AMF determines that NSSAA needs to be performed on the S-NSSAI in the requested NSSAI. Specifically, the AMF determines, based on the subscription data of the UE, whether the S-NSSAI on which the NSSAA process needs to be performed is included in the requested NSSAI. If the S-NSSAI is included, the AMF determines that the UE needs to perform the NSSAA process after the current registration process. In other words, it may be understood as that the requested NSSAI includes the slice type (HPLMN S-NSSAI) of the home domain network.

Example 1: The requested NSSAI carried by the UE is the S-NSSAI-1 and the S-NSSAI-2, the NSSAA process needs to be performed on the S-NSSAI-1, and the NSSAA process does not need to be performed on the S-NSSAI-2.

Meaning 2: If specific S-NSSAI in the requested NSSAI can be mapped to the subscribed S-NSSAI, and NSSAA needs to be performed on the subscribed S-NSSAI, the AMF determines that NSSAA needs to be performed on the S-NSSAI in the requested NSSAI.

Specifically, if the AMF determines, based on the subscription data of the UE, that specific S-NSSAI included in the requested NSSAI can be mapped to HPLMN S-NSSAI, and the NSSAA process needs to be performed on the HPLMN S-NSSAI, the AMF determines that the UE needs to perform the NSSAA process after the current registration process.

Example 2: The requested NSSAI carried by the UE is S-NSSAI-A and S-NSSAI-B, where the S-NSSAI-A is mapped to the S-NSSAI-1, the S-NSSAI-B is mapped to the S-NSSAI-2, and the NSSAA process needs to be performed on the S-NSSAI-1, but the NSSAA process does not need to be performed on the S-NSSAI-2. In this case, the AMF determines that the UE needs to perform the NSSAA process on the S-NSSAI-1 after the current registration process.

Step 204: The AMF sends a registration accept (Registration Accept) message to the UE, where the registration accept message carries allowed NSSAI (Allowed NSSAI), pending NSSAI (Pending NSSAI), and a cause value.

The allowed NSSAI includes only the S-NSSAI on which NSSAA does not need to be performed. The pending NSSAI includes the S-NSSAI on which NSSAA needs to be performed. The cause value is waiting for NSSAA. This cause value indicates to the UE that the S-NSSAI on which NSSAA needs to be performed is in a pending (pending) state.

For Example 1 in the foregoing examples, the allowed NSSAI is equal to the S-NSSAI-2, the pending NSSAI is equal to the S-NSSAI-1, and the cause value is waiting for NSSAA. For Example 2 in the foregoing examples, the allowed NSSAI is equal to the S-NSSAI-B, the pending NSSAI is equal to the S-NSSAI-A, and the cause value is waiting for NSSAA. It should be noted that the pending NSSAI may also be referred to as suspended NSSAI. In this embodiment of this application, an example in which the pending NSSAI is referred to as pending NSSAI is used for description.

Step 205: After sending the registration accept message, the AMF performs the NSSAA process on pending S-NSSAI.

It should be noted that, in the present invention, that the AMF performs NSSAA on S-NSSAI in the pending NSSAI may have two meanings:
Meaning 1: If specific S-NSSAI in the pending NSSAI belongs to the subscribed S-NSSAI, and NSSAA needs to be performed on the subscribed S-NSSAI, the AMF performs NSSAA on the S-NSSAI.

For example, Example 1 in the foregoing examples is continued. The pending NSSAI is equal to the S-NSSAI-1. Because the S-NSSAI-1 is HPLMN S-NSSAI, the AMF performs the NSSAA process on the S-NSSAI-1.

Meaning 2: If specific S-NSSAI in the pending NSSAI is mapped to the subscribed S-NSSAI, and NSSAA needs to be performed on the subscribed S-NSSAI, the AMF performs NSSAA on the subscribed S-NSSAI.

Example 2 in the foregoing examples is continued. The pending NSSAI is equal to the S-NSSAI-A. Because the S-NSSAI-A is mapped to the S-NSSAI-1, the AMF performs the NSSAA process on the S-NSSAI-1.

Step 205 is an optional step. When there is the S-NSSAI on which the NSSAA process needs to be performed, step 205 is performed. Otherwise, step 205 is not performed.

It should be noted that if there are a plurality of pieces of S-NSSAI on which the NSSAA process needs to be performed, step 205 may be performed for a plurality of times.

Step 206: After completely performing the NSSAA process, the AMF determines, based on a result of the process, whether to update the allowed NSSAI of the UE. If the allowed NSSAI needs to be updated, the AMF sends new allowed NSSAI (new Allowed NSSAI) to the UE in a configuration update process.

If the NSSAA process is successfully performed, the S-NSSAI is added to the allowed NSSAI in step 204 to generate the new allowed NSSAI. If the NSSAA process fails to be performed, the AMF does not need to update the allowed NSSAI of the UE.

For Example 1 in the foregoing examples, if NSSAA is successfully performed on the S-NSSAI-1, the AMF sends new allowed NSSAI to the UE. The new allowed NSSAI includes the S-NSSAI-1 and the S-NSSAI-2. If NSSAA fails to be performed on the S-NSSAI-1, the AMF does not update the allowed NSSAI for the UE. For Example 2 in the foregoing examples, if NSSAA is successfully performed on the S-NSSAI-1, the AMF sends new allowed NSSAI to the UE. The new allowed NSSAI includes the S-NSSAI-A and the S-NSSAI-B. If NSSAA fails to be performed on the S-NSSAI-1, the AMF does not update the allowed NSSAI for the UE.

Step 206 is an optional step. When step 205 is performed and the allowed NSSAI of the UE needs to be updated, step 206 is performed.

According to the foregoing embodiment, after the registration process of the UE, if necessary, the NSSAA process may be performed on the S-NSSAI, and the allowed NSSAI of the UE may be updated.

To ensure a service level agreement (SLA) of a network slice, statistics collection and control of a network slice quota (Network slice quota) need to be further implemented. The statistics collection and control of the network slice quota include: collecting statistics about and controlling a quantity of users that use a specific network slice for access, to ensure that the quantity does not exceed a maximum quantity of users allowed by the network slice.

To collect statistics about and control a maximum quantity of users in a slice, subscribed NSSAI (Subscribed NSSAI) may include indication information indicating whether the subscribed S-NSSAI requires user quantity quota management (quota management) or does not require user quantity quota management.

For example, when the UE registers with the network, the AMF determines, based on subscription data of the UE (including NSSAI to which the UE subscribes), whether S-NSSAI requiring user quantity quota management is included in requested NSSAI. If the S-NSSAI is included, the AMF sends a request message to an NSSF to trigger the NSSF to perform UE counting (UE counting) on the S-NSSAI.

If the NSSF determines that a quantity of users (that is, a quantity of UEs) currently accessing a slice corresponding to the S-NSSAI has reached a maximum quantity of users allowed by the slice corresponding to the S-NSSAI, the NSSF may reject access of the UE to the S-NSSAI, determine that the S-NSSAI is rejected (Rejected) NSSAI, and determine that a rejection cause value is that the quantity of users accessing the slice corresponding to the S-NSSAI has reached the maximum quantity of users allowed by the slice corresponding to the S-NSSAI, or user counting fails to be performed on the S-NSSAI.

If the NSSF determines that a quantity of users currently accessing a slice corresponding to the S-NSSAI does not reach a maximum quantity of users allowed by the slice corresponding to the S-NSSAI, the NSSF allows access of the UE to the S-NSSAI and adds the S-NSSAI to allowed NSSAI.

Therefore, network slice user quantity quota management is related to the NSSF. When the NSSAI requested by the UE includes the S-NSSAI requiring the user quantity quota management, the AMF needs to interact with the NSSF to trigger the NSSF to perform UE counting.

For a network slice corresponding to S-NSSAI, there may be one scenario: Both NSSAA and user counting need to be performed on the network slice. Therefore, when the UE registers with the network, if the S-NSSAI corresponding to the network slice on which both NSSAA and user counting need to be performed is included in the requested NSSAI, currently, there is no corresponding solution to accurately determining whether to allow access of the terminal device to the network slice.

It should be noted that in embodiments of this application, a network slice may also be referred to as a slice, and the network slice and the slice have a same meaning. Performing NSSAA on S-NSSAI means performing NSSAA on a network slice corresponding to the S-NSSAI. Performing user counting on the S-NSSAI means performing user counting on the network slice corresponding to the S-NSSAI. Unified descriptions are provided herein, and details are not described below again.

To resolve the foregoing problem, embodiments of this application provide two solutions.

Solution 1: After the NSSF receives, from the AMF, requested NSSAI carried by the UE, the NSSF determines one or more of allowed NSSAI, pending NSSAI (Pending NSSAI), and rejected NSSAI based on the requested NSSAI. For S-NSSAI that is included in the requested NSSAI and on which both user counting and NSSAA need to be performed, the NSSF does not perform user counting first, but sends indication information to the AMF, to indicate to notify the NSSF after NSSAA is successfully performed on the S-NSSAI. Then, the NSSF determines, based on a result of performing user counting on the S-NSSAI, whether to update the allowed NSSAI and/or the rejected NSSAI.

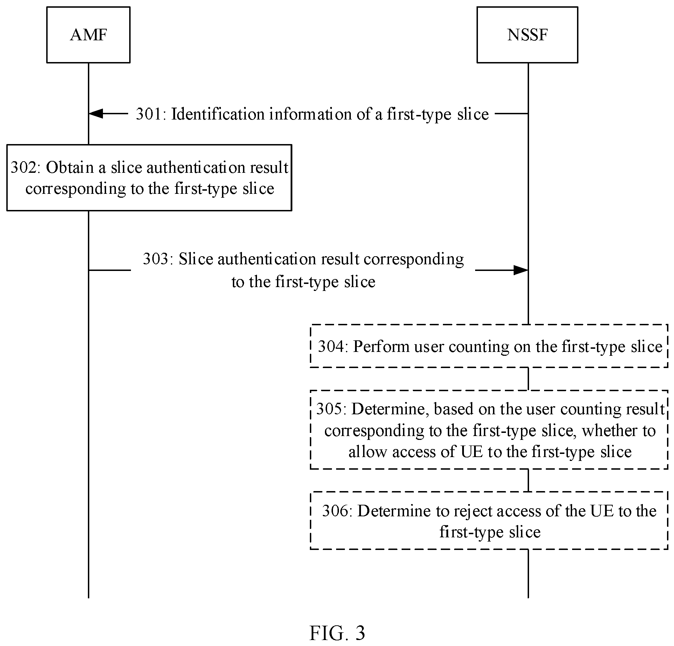

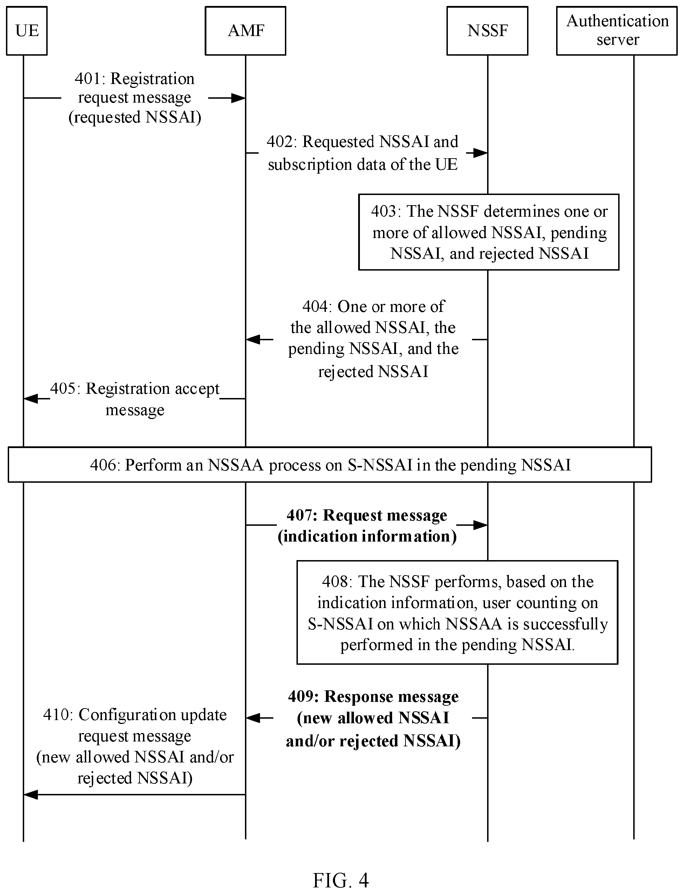

The following embodiments corresponding to FIG. 3 and FIG. 4 are specific implementations of Solution 1.

Solution 2: After the AMF receives, from the UE, requested NSSAI carried by the UE, the AMF determines one or more of allowed NSSAI, pending NSSAI (Pending NSSAI), and rejected NSSAI. For S-NSSAI that is included in the requested NSSAI and on which both user counting and NSSAA need to be performed, the AMF performs NSSAA first. If successfully performing the NSSAA, the AMF notifies the NSSF to perform user counting. Then, the AMF determines, based on a user counting result returned by the NSSF, whether to update the allowed NSSAI and/or the rejected NSSAI.

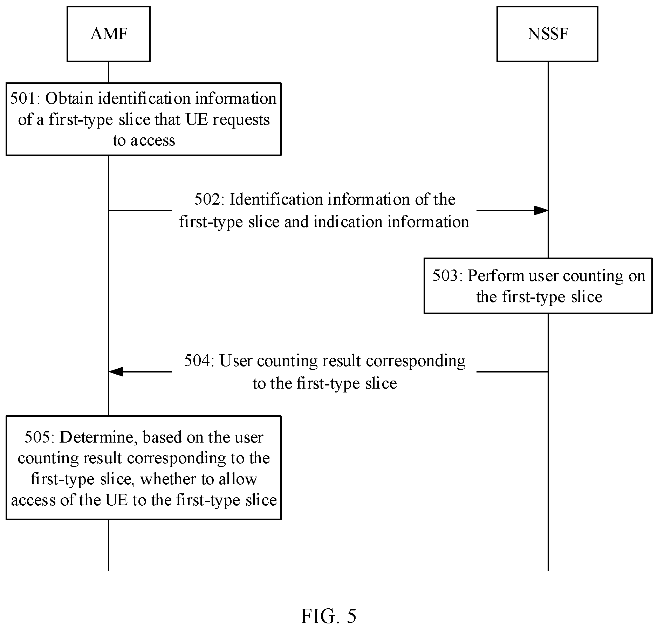

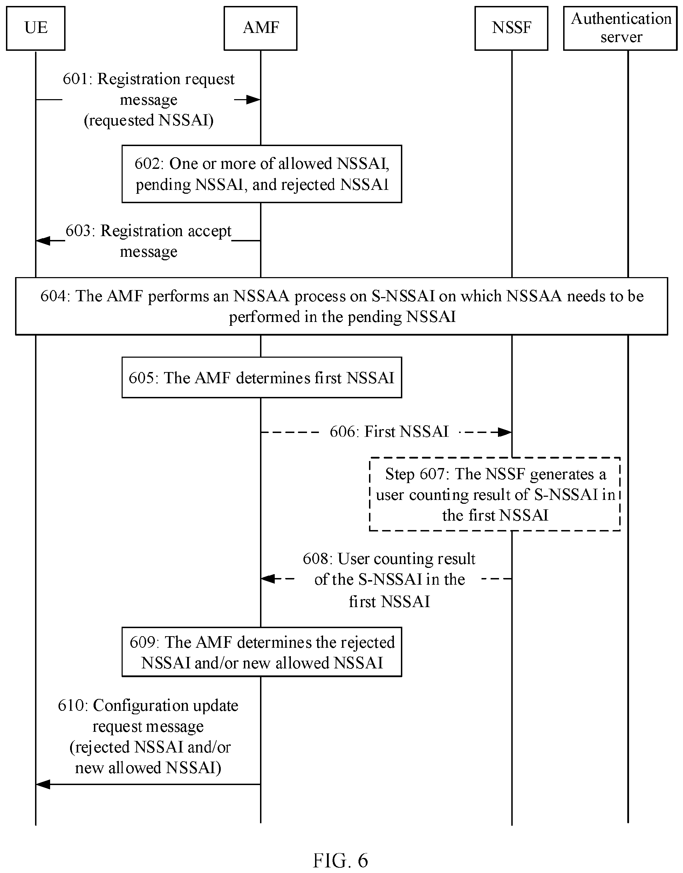

The following embodiments corresponding to FIG. 5 and FIG. 6 are specific implementations of Solution 2.

To resolve the foregoing problem, based on the network architecture shown in FIG. 1A or FIG. 1B, as shown in FIG. 3, this application provides a communication method. The method is an implementation of Solution 1. On a terminal device side, the method may be performed by UE or a component (such as a chip or a circuit) used for the UE. On a network side, the method may be performed by an AMF or an NSSF or a component (such as a chip or a circuit) used for the AMF or the NSSF. For ease of description, an example in which the UE, the AMF, and the NSSF perform the method is used below for description.

In embodiments, slices corresponding to S-NSSAI in requested NSSAI are classified into the following four types:
A first-type slice is a slice that is in the requested NSSAI and on which both NSSAA and user counting need to be performed.
A second-type slice is a slice that is in the requested NSSAI and on which NSSAA does not need to be performed but user counting needs to be performed.
A third-type slice is a slice that is in the requested NSSAI and on which NSSAA needs to be performed but user counting does not need to be performed.
A fourth-type slice is a slice that is in the requested NSSAI and on which NSSAA does not need to be performed and user counting does not need to be performed.

In embodiments, slice authentication may also be referred to as NSSAA.

In embodiments, user counting results include that the user counting succeeds and the user counting fails. That the user counting succeeds means that a total quantity of users in a slice plus 1 does not exceed a maximum quantity of users allowed by the slice. That the user counting fails means that the total quantity of users in the slice plus 1 exceeds the maximum quantity of users allowed by the slice.

The method in embodiments includes the following steps.

Step 301: The NSSF sends identification information of a first-type slice to the AMF. Correspondingly, the AMF may receive the identification information of the first-type slice.

Step 302: The AMF obtains a slice authentication result corresponding to the first-type slice.

Step 303: The AMF sends the slice authentication result corresponding to the first-type slice to the NSSF. Correspondingly, the NSSF may receive the slice authentication result corresponding to the first-type slice.

If the slice authentication result corresponding to the first-type slice is that slice authentication succeeds, the following step 304 and step 305 are performed.

If the slice authentication result corresponding to the first-type slice is that slice authentication fails, the following step 306 is performed.

Step 304: The NSSF performs user counting on the first-type slice.

Step 305: The NSSF determines, based on a user counting result corresponding to the first-type slice, whether to allow access of the UE to the first-type slice.

For example, if the user counting result corresponding to the first-type slice is that the user counting succeeds, the NSSF determines to allow access of the UE to the first-type slice. That is, if the NSSF determines that the slice authentication result corresponding to the first-type slice is that the slice authentication succeeds, and the corresponding user counting result is that the user counting succeeds, the NSSF determines to allow access of the UE to the first-type slice.

For another example, if the user counting result corresponding to the first-type slice is that the user counting fails, the NSSF determines to reject access of the UE to the first-type slice. That is, if the NSSF determines that the slice authentication result corresponding to the first-type slice is that the slice authentication succeeds, but the corresponding user counting result is that the user counting fails, the NSSF determines to reject access of the UE to the first-type slice.

Step 306: The NSSF determines to reject access of the UE to the first-type slice.

That is, if the NSSF determines that the slice authentication result corresponding to the first-type slice is that the slice authentication fails, the NSSF does not need to perform user counting on the first-type slice, and determines to reject access of the UE to the first-type slice.

Based on the foregoing embodiment, for a slice on which both user counting and slice authentication need to be performed, the AMF first performs slice authentication, and sends a slice authentication result to the NSSF. The NSSF determines, based on the slice authentication result, whether to allow access of the UE to the slice. According to the method, whether to allow access of the UE to a specific slice can be accurately determined. In addition, for a slice on which slice authentication fails to be performed, user counting does not need to be performed, so that signaling overheads of the user counting can be reduced.

In an implementation method, after step 301 and before step 303, or in step 301, the NSSF may further send indication information to the AMF, where the indication information indicates the AMF to send the slice authentication result corresponding to the first-type slice to the NSSF. Based on the method, the NSSF may explicitly notify the AMF to report the slice authentication result to the NSSF.

In an implementation method, before step 301, in a registration process of the UE, the UE may send requested NSSAI to the AMF, where the requested NSSAI includes identification information of a slice that the UE requests to access, and the requested NSSAI includes the identification information of the first-type slice. Then, the AMF sends the requested NSSAI to the NSSF, so that the NSSF can determine allowed NSSAI based on the requested NSSAI. The allowed NSSAI includes identification information of a slice (that is, the foregoing fourth-type slice) on which neither slice authentication nor user counting needs to be performed in the requested NSSAI. The allowed NSSAI indicates identification information corresponding to a slice to which access of the UE is allowed.

The allowed NSSAI includes identification information of at least one slice or is empty.

After step 305, if the slice authentication result corresponding to the first-type slice is that the slice authentication succeeds, and the user counting result corresponding to the first-type slice is that the user counting succeeds, the NSSF may determine that the allowed NSSAI includes the identification information of the first-type slice. That is, if the determined allowed NSSAI is empty, the NSSF generates the allowed NSSAI based on the identification information of the first-type slice. If the determined allowed NSSAI is not empty, by the NSSF adds the identification information of the first-type slice to the determined allowed NSSAI, to obtain updated allowed NSSAI. Further, the NSSF may send the allowed NSSAI or the updated allowed NSSAI to the AMF, and the AMF may send the allowed NSSAI or the updated allowed NSSAI to the UE.

After step 305, if the slice authentication result corresponding to the first-type slice is that the slice authentication fails, or if the slice authentication result corresponding to the first-type slice is that the slice authentication succeeds, but the user counting result corresponding to the first-type slice is that the user counting fails, the NSSF may determine that rejected NSSAI includes the identification information of the first-type slice. The rejected NSSAI indicates identification information corresponding to a slice to which access of the UE is rejected. Further, the NSSF may send the rejected NSSAI to the AMF, and the AMF may send the rejected NSSAI to the UE.

The foregoing is an implementation method for determining, by the NSSF, whether access of the UE to any first-type slice is allowed.

For a second-type slice, because only user counting needs to be performed and slice authentication does not need to be performed, the NSSF may perform user counting on the second-type slice. If a user counting result corresponding to the second-type slice is that the user counting succeeds, the NSSF determines to allow access of the UE to the second-type slice. If the user counting result corresponding to the second-type slice is that the user counting fails, the NSSF determines to reject access of the UE to the second-type slice.

For a third-type slice, because only slice authentication needs to be performed and user counting does not need to be performed, the NSSF may send identification information of the third-type slice to the AMF, and the AMF obtains an authentication result corresponding to the third-type slice and sends the authentication result to the NSSF. If the slice authentication result corresponding to the third-type slice is that the slice authentication succeeds, the NSSF determines to allow access of the UE to the third-type slice. If the slice authentication result corresponding to the third-type slice is that the slice authentication fails, the NSSF determines to reject access of the UE to the third-type slice.

For a fourth-type slice, because neither slice authentication nor user counting needs to be performed, the NSSF may directly determine to allow access of the UE to the fourth-type slice.

It should be noted that for the foregoing four types of slices, the NSSF and the AMF may separately determine, through an independent process, whether to allow access of the UE to each type of slice. Certainly, the NSSF and the AMF may alternatively determine, through a unified process, whether to allow access of the UE to each type of slice. For example, for both the first-type slice and the third-type slice, because the AMF needs to obtain the slice authentication results, the NSSF may send the identification information of the first-type slice and the identification information of the third-type slice to the AMF in one step, and receive the slice authentication result corresponding to the first-type slice and the slice authentication result corresponding to the third-type slice from the AMF in one step.

In conclusion, the embodiment corresponding to FIG. 3 discloses the following technical solutions:
A network slice selection network element sends identification information of a first slice to a mobility management network element, where the first slice is a slice on which both slice authentication and user counting need to be performed. The network slice selection network element receives a slice authentication result corresponding to the first slice from the mobility management network element. If the slice authentication result corresponding to the first slice is that the slice authentication succeeds, the network slice selection network element performs user counting on the first slice. The network slice selection network element determines, based on a user counting result corresponding to the first slice, whether to allow access of a terminal device to the first slice. The first slice herein includes the foregoing first-type slice.

In a possible implementation method, that the network slice selection network element determines, based on a user counting result corresponding to the first slice, whether to allow access of a terminal device to the first slice includes: If the user counting result corresponding to the first slice is that the user counting succeeds, the network slice selection network element determines to allow access of the terminal device to the first slice; or if the user counting result corresponding to the first slice is that the user counting fails, the network slice selection network element determines to reject access of the terminal device to the first slice.

In a possible implementation method, if the slice authentication result corresponding to the first slice is that the slice authentication fails, the network slice selection network element determines to reject access of the terminal device to the first slice.

In a possible implementation method, before the network slice selection network element receives the slice authentication result corresponding to the first slice from the mobility management network element, the network slice selection network element sends indication information to the mobility management network element, where the indication information indicates the mobility management network element to send the slice authentication result corresponding to the first slice to the network slice selection network element.

In a possible implementation method, before the network slice selection network element sends the identification information of the first slice to the mobility management network element, the network slice selection network element receives requested NSSAI from the mobility management network element, where the requested NSSAI includes identification information of a slice that the terminal device requests to access, and the requested NSSAI includes the identification information of the first slice. The network slice selection network element determines allowed NSSAI based on the requested NSSAI, where the allowed NSSAI includes identification information of a slice on which neither slice authentication nor user counting needs to be performed in the requested NSSAI.

In a possible implementation method, before the network slice selection network element sends the identification information of the first slice to the mobility management network element, if the slice authentication result corresponding to the first slice is that the slice authentication succeeds and the user counting result corresponding to the first slice is that the user counting succeeds, the network slice selection network element determines that the allowed NSSAI includes the identification information of the first slice. The network slice selection network element sends the allowed NSSAI to the mobility management network element.

In a possible implementation method, the network slice selection network element performs user counting on a second slice, where the second slice is a slice on which user counting needs to be performed but slice authentication does not need to be performed. If a user counting result corresponding to the second slice is that the user counting succeeds, the network slice selection network element determines to allow access of the terminal device to the second slice; or if a user counting result corresponding to the second slice is that the user counting fails, the network slice selection network element determines to reject access of the terminal device to the second slice. The second slice herein includes the foregoing second-type slice.

In a possible implementation method, the network slice selection network element sends identification information of a third slice to the mobility management network element, where the third slice is a slice on which slice authentication needs to be performed but user counting does not need to be performed. The network slice selection network element receives a slice authentication result corresponding to the third slice from the mobility management network element. If the slice authentication result corresponding to the third slice is that the slice authentication succeeds, the network slice selection network element determines to allow access of the terminal device to the third slice; or if the slice authentication result corresponding to the third slice is that the slice authentication fails, the network slice selection network element determines to reject access of the terminal device to the third slice. The third slice herein includes the foregoing third-type slice.

In conclusion, the embodiment corresponding to FIG. 3 further discloses the following technical solutions:
A mobility management network element receives identification information of a first slice from a network slice selection network element, where the first slice is a slice on which slice authentication needs to be performed. The mobility management network element obtains a slice authentication result corresponding to the first slice. The mobility management network element sends the slice authentication result corresponding to the first slice to the network slice selection network element, where the slice authentication result corresponding to the first slice is used by the network slice selection network element to determine whether to allow access of a terminal device to the first slice. The first slice herein includes the foregoing first-type slice and the foregoing third-type slice.

In a possible implementation method, the mobility management network element receives allowed NSSAI from the network slice selection network element. The allowed NSSAI indicates identification information corresponding to a slice to which access of the terminal device is allowed, the slice to which access of the terminal device is allowed is a slice on which slice authentication succeeds and user counting succeeds, and the allowed NSSAI includes the identification information of the first slice.

In a possible implementation method, the mobility management network element receives rejected NSSAI from the network slice selection network element. The rejected NSSAI indicates identification information corresponding to a slice to which access of the terminal device is rejected, the slice to which access of the terminal device is rejected is a slice on which slice authentication fails or user counting fails, and the rejected NSSAI includes the identification information of the first slice.

The following describes the process shown in FIG. 3 with reference to a specific example shown in FIG. 4. FIG. 4 is a schematic flowchart of another communication method according to this application.

This embodiment is summarized as follows: An AMF determines, based on subscription data of UE, that user counting needs to be performed on one or more pieces of S-NSSAI in requested NSSAI, and the AMF interacts with an NSSF. In this case, the NSSF further determines that there are one or more pieces of S-NSSAI on which both user counting and an NSSAA process need to be performed in the requested NSSAI (where the following uses S-NSSAI-1 as an example). Then, the NSSF determines that the NSSAA process is first performed on the S-NSSAI-1. In other words, it may be understood that the NSSF temporarily does not perform user counting on the S-NSSAI-1. The NSSF first performs user counting on another network slice on which user counting needs to be performed but NSSAA does not need to be performed in the requested NSSAI, and sends indication information for the S-NSSAI-1 to the AMF, indicating the AMF to notify the NSSF after NSSAA is successfully performed on the S-NSSAI-1. After NSSAA is successfully performed on the S-NSSAI-1, the AMF requests the NSSF to perform user counting on the S-NSSAI-1 based on the indication information corresponding to the S-NSSAI-1. Then, the NSSF determines new allowed NSSAI based on a user counting result. If a quantity of users of a slice corresponding to the S-NSSAI-1 plus 1 does not exceed a maximum quantity of users allowed by the slice corresponding to the S-NSSAI-1, the NSSF adds the S-NSSAI-1 to allowed NSSAI to obtain new allowed NSSAI. If the quantity of users of the slice corresponding to the S-NSSAI-1 plus 1 exceeds the maximum quantity of users allowed by the slice corresponding to the S-NSSAI-1, the NSSF notifies the UE that the S-NSSAI-1 is rejected. A rejection cause value is as follows: The quantity of users of the S-NSSAI-1 has reached the maximum quantity of users allowed by the slice corresponding to the S-NSSAI-1, or user counting fails to be performed on the S-NSSAI-1.

The method includes the following steps.

Step 401: The UE initiates a registration process, and sends a registration request (Registration Request) message to the AMF, where the registration request message carries requested NSSAI (Requested NSSAI).

Step 402: The AMF determines, based on subscription data of the UE, that user counting needs to be performed on at least one piece of S-NSSAI in the requested NSSAI, and the AMF sends the requested NSSAI and the subscription data of the UE to the NSSF.

The subscription data includes subscribed NSSAI (Subscribed NSSAI) and two pieces of indication information (namely, first indication information and second indication information) corresponding to each piece of S-NSSAI in the subscribed NSSAI. The first indication information indicates whether NSSAAneeds to be performed on subscribed S-NSSAI, and the second indication information indicates whether user counting (UE counting) needs to be performed on the subscribed S-NSSAI. Each piece of S-NSSAI in the subscribed NSSAI corresponds to one piece of first indication information and one piece of second indication information.

The AMF may request to obtain the subscription data of the UE by invoking a service-oriented operation Nudm_SDM_Get of a UDM. Then, the UDM sends the subscription data of the UE to the AMF by using an Nudm_SDM_Get response.

For example, in this embodiment, the subscription data obtained by the AMF is shown in Table 2.

**Table 2**

| Subscribed NSSAI | First indication information: whether NSSAA needs to be performed | Second indication information: whether user counting needs to be performed |
|---|---|---|
| S-NSSAI-1 | Yes | Yes |
| S-NSSAI-2 | Yes | No |
| S-NSSAI-3 | No | No |
| S-NSSAI-4 | No | Yes |

It should be noted that, in the present invention, that the AMF determines that user counting needs to be performed on at least one piece of S-NSSAI in the requested NSSAI may have two meanings:
Meaning 1: If the at least one piece of S-NSSAI in the requested NSSAI belongs to the subscribed S-NSSAI, and user counting needs to be performed on the subscribed S-NSSAI, the AMF determines that user counting needs to be performed on the at least one piece of S-NSSAI in the requested NSSAI.

Specifically, the AMF determines, based on the subscription data of the UE, whether the S-NSSAI on which user counting needs to be performed is included in the requested NSSAI. If the S-NSSAI is included, the AMF determines that user counting needs to be performed. In other words, it may be understood as that the requested NSSAI includes a slice type (HPLMN S-NSSAI) of a home domain network.

In Example 1, in this embodiment of this application, that the requested NSSAI in step 401 includes the S-NSSAI-1, the S-NSSAI-2, and the S-NSSAI-3 is used as an example. It can be learned from Table 2 that both NSSAA and user counting need to be performed on the S-NSSAI-1, only NSSAA needs to be performed on the S-NSSAI-2, and neither NSSAA nor user counting needs to be performed on the S-NSSAI-3.

Meaning 2: If the at least one piece of S-NSSAI in the requested NSSAI can be mapped to the subscribed S-NSSAI, and user counting needs to be performed on the subscribed S-NSSAI, the AMF determines that user counting needs to be performed on the at least one piece of S-NSSAI in the requested NSSAI.

Specifically, if the AMF determines, based on the subscription data of the UE, that S-NSSAI included in the requested NSSAI can be mapped to HPLMN S-NSSAI, and user counting needs to be performed on the HPLMN S-NSSAI, the AMF determines that user counting needs to be performed.

In Example 2, in this embodiment of this application, that the requested NSSAI in step 401 includes S-NSSAI-A, S-NSSAI-B, and S-NSSAI-C is used as an example. The S-NSSAI-A is mapped to the S-NSSAI-1, the S-NSSAI-B is mapped to the S-NSSAI-2, and the S-NSSAI-C is mapped to the S-NSSAI-3. It can be learned from Table 2 that both NSSAA and user counting need to be performed on the S-NSSAI-1, only NSSAA needs to be performed on the S-NSSAI-2, and neither NSSAA nor user counting needs to be performed on the S-NSSAI-3. In this case, it may also be understood as that both NSSAA and user counting need to be performed on the S-NSSAI-A, only NSSAA needs to be performed on the S-NSSAI-B, and neither NSSAA nor user counting needs to be performed on the S-NSSAI-C.

It should be noted that the foregoing is merely an example. During actual application, the requested NSSAI includes zero, one, or more pieces of S-NSSAI on which both NSSAA and user counting need to be performed. The requested NSSAI may include zero, one, or more pieces of S-NSSAI on which only NSSAA needs to be performed. The requested NSSAI may include zero, one, or more pieces of S-NSSAI on which only user counting needs to be performed.

In an implementation method, the AMF may carry the requested NSSAI (Requested NSSAI) and the subscription data of the UE by invoking a service-oriented operation Nnssf_Selection_get of the NSSF.

Step 403: The NSSF determines one or more of allowed NSSAI, pending NSSAI, and rejected NSSAI.

After receiving the requested NSSAI and the subscription data of the UE, the NSSF determines whether NSSAA needs to be performed on the S-NSSAI in the requested NSSAI and whether user counting needs to be performed, to determine one or more of the allowed NSSAI, the pending NSSAI, and the rejected NSSAI.

The allowed NSSAI includes S-NSSAI on which neither user counting nor NSSAA needs to be performed in the requested NSSAI, and/or S-NSSAI on which NSSAA does not need to be performed but user counting needs to be performed and the user counting succeeds in the requested NSSAI. The pending NSSAI (Pending NSSAI) includes S-NSSAI on which NSSAA needs to be performed in the requested NSSAI. The rejected NSSAI includes S-NSSAI on which NSSAA does not need to be performed but user counting needs to be performed and the user counting fails in the requested NSSAI.

That the user counting succeeds means that a total quantity of users in a slice corresponding to S-NSSAI plus 1 does not exceed a maximum quantity of users allowed by the slice corresponding to the S-NSSAI. That the user counting fails means that the total quantity of users in the slice corresponding to the S-NSSAI plus 1 exceeds the maximum quantity of users allowed by the slice corresponding to the S-NSSAI.

It should be noted that, in the present invention, a method used by the NSSF to determine that NSSAA needs to be performed on the S-NSSAI in the requested NSSAI is the same as the method used by the AMF to determine that NSSAA needs to be performed on the S-NSSAI in the requested NSSAI in step 203. A method used by the NSSF to determine that user counting needs to be performed on the S-NSSAI in the requested NSSAI is the same as the method used by the AMF to determine that user counting needs to be performed on the S-NSSAI in the requested NSSAI in step 402. Details are not described herein again.

Optionally, when the pending NSSAI is not empty, the NSSF may further determine a first cause value, to indicate that a cause for which S-NSSAI in the pending NSSAI is pending is waiting for NSSAA.

Optionally, when the rejected NSSAI is not empty, the NSSF may further determine a second cause value, to indicate that a cause for which the S-NSSAI in the rejected NSSAI is rejected is that a quantity of users accessing a slice corresponding to the S-NSSAI has reached a maximum quantity of users allowed by the network slice corresponding to the S-NSSAI, or user counting fails to be performed on the S-NSSAI.

Optionally, when the pending NSSAI is not empty, the NSSF may further determine indication information. The indication information indicates the AMF to notify the NSSF after NSSAA is successfully performed on the S-NSSAI included in the pending NSSAI. Certainly, when the pending NSSAI is not empty, the NSSF may not determine the indication information, and the AMF actively notifies the NSSF after NSSAA is successfully performed on the pending NSSAI.

Example 1 in the foregoing examples is continued. If the NSSF determines that the S-NSSAI-1 and the S-NSSAI-2 in the requested NSSAI are S-NSSAI on which NSSAA needs to be performed, the NSSF determines that the pending NSSAI includes the S-NSSAI-1 and the S-NSSAI-2. If the NSSF determines that the S-NSSAI-3 in the requested NSSAI is S-NSSAI on which neither NSSAA nor user counting needs to be performed, the NSSF determines that the allowed NSSAI includes the S-NSSAI-3.

Optionally, the NSSF further determines the first cause value, to indicate that a cause for which the S-NSSAI-1 and the S-NSSAI-2 are pending is waiting for NSSAA.

Optionally, the NSSF further generates indication information, to indicate the AMF to notify the NSSF after NSSAA is successfully performed on each of the S-NSSAI-1 and the S-NSSAI-2.

For Example 2 in the foregoing examples, if the NSSF determines that the S-NSSAI-1 and the S-NSSAI-2 to which the S-NSSAI-A and the S-NSSAI-B in the requested NSSAI are respectively mapped are S-NSSAI on which NSSAA needs to be performed, the NSSF determines that the pending NSSAI includes the S-NSSAI-A and the S-NSSAI-B.

If the NSSF determines that the S-NSSAI-3 to which the S-NSSAI-C in the requested NSSAI is mapped is S-NSSAI on which neither NSSAA nor user counting needs to be performed, the NSSF determines that the allowed NSSAI includes the S-NSSAI-C.

Optionally, the NSSF further determines the first cause value, to indicate that a cause for which the S-NSSAI-A and the S-NSSAI-B are pending is waiting for NSSAA. Optionally, the NSSF further generates indication information, to indicate the AMF to notify the NSSF after NSSAA is successfully performed on each of the S-NSSAI-A and the S-NSSAI-B.

It should be noted that, in the present invention, a method used by the NSSF to determine the allowed NSSAI, the pending NSSAI, and the rejected NSSAI is not limited to the descriptions in step 403, and may further include another method or condition. For example, when the requested NSSAI includes only the S-NSSAI-1, a quantity of S-NSSAI included in the allowed NSSAI is 0 or the allowed NSSAI is empty. For another example, when the requested NSSAI includes the S-NSSAI-1 and the S-NSSAI-3, and the S-NSSAI-3 is unavailable in an area in which the UE is currently located, the pending NSSAI includes the S-NSSAI-1, the rejected NSSAI includes the S-NSSAI-3, and the NSSF may further determine a cause value, to indicate a cause for which the S-NSSAI in the rejected NSSAI is rejected is that the S-NSSAI is unavailable in the current area.

Step 404: The NSSF sends one or more of the allowed NSSAI (which may also be referred to as first allowed NSSAI), the pending NSSAI, and the rejected NSSAI (which may also be referred to as first rejected NSSAI) to the AMF.

It should be noted that if the NSSF determines that the allowed NSSAI is empty, the NSSF does not need to send the allowed NSSAI to the AMF or sends empty allowed NSSAI (empty Allowed NSSAI) to the AMF. If the NSSF determines that the pending NSSAI is empty, the NSSF does not need to send the pending NSSAI to the AMF or sends empty pending NSSAI (empty Pending NSSAI) to the AMF. If the NSSF determines that the rejected NSSAI is empty, the NSSF does not need to send the rejected NSSAI to the AMF or sends empty rejected NSSAI (empty Rejected NSSAI) to the AMF.

The empty allowed NSSAI indicates that a quantity of S-NSSAI included in the allowed NSSAI is 0, the empty pending NSSAI indicates that a quantity of S-NSSAI included in the pending NSSAI is 0, and the empty rejected NSSAI indicates that a quantity of S-NSSAI included in the rejected NSSAI is 0.

Optionally, the NSSF may further send the first cause value and/or the second cause value to the AMF.

Optionally, the NSSF may further send the indication information to the AMF.

In an implementation method, the NSSF may send an Nnssf_Selection_get Response to the AMF, where Nnssf_Selection_get Response carries one or more of the allowed NSSAI, the pending NSSAI, and the rejected NSSAI.

Step 405: The AMF sends a registration accept message to the UE, where the registration accept message carries one or more of the allowed NSSAI, the pending NSSAI, and the rejected NSSAI.

It should be noted that if the AMF does not receive the allowed NSSAI from the NSSF or the AMF receives the empty allowed NSSAI from the NSSF, the AMF does not need to send the allowed NSSAI to the UE or sends the empty allowed NSSAI to the UE. If the AMF does not receive the rejected NSSAI, or the AMF receives the empty rejected NSSAI from the NSSF, the AMF does not need to send the rejected NSSAI to the UE or sends the empty rejected NSSAI to the UE. If the AMF does not receive the pending NSSAI or the AMF receives the empty pending NSSAI from the NSSF, the AMF does not need to send the pending NSSAI to the UE or sends the empty pending NSSAI to the UE.

When the pending NSSAI is sent to the UE, the first cause value may be further sent to the UE. When the rejected NSSAI is sent to the UE, the second cause value may be further sent to the UE.

Step 406: The AMF performs the NSSAA process on the S-NSSAI in the pending NSSAI.

For specific implementation details of performing the NSSAA process on the S-NSSAI in the pending NSSAI, refer to related descriptions of step 205 in a current technology. Details are not described herein again.

According to Example 1 in the foregoing examples, the AMF separately performs the NSSAA process on the S-NSSAI-1 and the S-NSSAI-2.

According to Example 2 in the foregoing examples, the AMF separately performs the NSSAA process on the S-NSSAI-1 and the S-NSSAI-2, where the S-NSSAI-1 and the S-NSSAI-2 are respectively mapped to the S-NSSAI-A and the S-NSSAI-B in the pending NSSAI.

Step 407: If an NSSAA result of the S-NSSAI in the pending NSSAI is a success, the AMF sends a request message to the NSSF, where the request message carries one or more pieces of S-NSSAI on which NSSAA is successfully performed in the pending NSSAI. Optionally, the request message further includes indication information, where the indication information indicates that an NSSAA result of the S-NSSAI is a success.

It should be noted that, that the NSSAA result of the S-NSSAI in the pending NSSAI is a success may have two meanings:
Meaning 1: If the S-NSSAI in the pending NSSAI belongs to the subscribed S-NSSAI, and NSSAA needs to be performed on the subscribed S-NSSAI and the NSSAA succeeds, the NSSAA result of the S-NSSAI in the pending NSSAI is a success.
Meaning 2: If the S-NSSAI in the pending NSSAI is mapped to the subscribed S-NSSAI, and NSSAA is performed on the subscribed S-NSSAI and the NSSAA succeeds, the NSSAA result of the S-NSSAI in the pending NSSAI is a success.

It should be noted that, if there are a plurality of pieces of S-NSSAI whose NSSAA results are a success, one piece of indication information may be reported for each piece of S-NSSAI whose NSSAA result is a success, and each piece of indication information indicates that the NSSAA result of the one piece of S-NSSAI is a success. Alternatively, only one piece of indication information is sent for the plurality of pieces of S-NSSAI whose NSSAA results are a success. The indication information indicates that the NSSAA results of the plurality of pieces of S-NSSAI are a success.

It should be noted that, if there is S-NSSAI on which the NSSAA process fails to be performed in the pending NSSAI, and there is also S-NSSAI on which the NSSAA process succeeds in the pending NSSAI, an implementation method is that the AMF sends only the S-NSSAI on which the NSSAA process succeeds in the pending NSSAI to the NSSF. Optionally, the AMF further sends indication information indicating that NSSAA is successfully performed on the S-NSSAI to the NSSF. The AMF does not send the S-NSSAI on which the NSSAA process fails in the pending NSSAI to the NSSF. The AMF determines the S-NSSAI on which the NSSAA process fails as the rejected NSSAI. Optionally, the AMF further determines a rejection cause value for the S-NSSAI: The NSSAA fails. Alternatively, the AMF does not send the S-NSSAI on which the NSSAA process fails to be performed in the pending NSSAI to the NSSF, so that the NSSF further determines the S-NSSAI on which the NSSAA process fails to be performed in the pending NSSAI in step 403 based on the pending NSSAI in step 403 and the S-NSSAI on which the NSSAA process succeeds in the pending NSSAI and that is sent by the AMF in step 407. That is, the S-NSSAI on which the NSSAA process fails to be performed in step 407 is obtained by subtracting, from the pending NSSAI in step 403, the S-NSSAI on which the NSSAA process succeeds in the pending NSSAI and that is sent by the AMF. Then the NSSF determines the S-NSSAI on which the NSSAA process fails to be performed as the rejected NSSAI. Optionally, the NSSF further determines a rejection cause value for the S-NSSAI: The NSSAA fails.

It should be noted that, if the pending NSSAI includes both the S-NSSAI on which the NSSAA process fails to be performed and the S-NSSAI on which the NSSAA process succeeds, in another implementation method, the AMF sends both the S-NSSAI on which the NSSAA process succeeds in the pending NSSAI and the S-NSSAI on which the NSSAA process fails to be performed in the pending NSSAI to the NSSF. In addition, the AMF further needs to indicate, to the NSSF, the S-NSSAI on which the NSSAA process succeeds and the S-NSSAI on which the NSSAA process fails to be performed. In this way, the NSSF may perform user counting based on the S-NSSAI on which the NSSAA process succeeds. In addition, the NSSF determines the S-NSSAI on which the NSSAA process fails to be performed in the pending NSSAI as the rejected NSSAI. Optionally, the NSSF further determines a rejection cause value for the S-NSSAI: The NSSAA fails.

Optionally, in this step, the AMF further sends the allowed NSSAI to the NSSF, that is, the allowed NSSAI (the first allowed NSSAI) sent to the UE in step 405.

Example 1 in the foregoing examples is continued. The pending NSSAI includes the S-NSSAI-1 and the S-NSSAI-2. Assuming that a network successfully performs NSSAA on the S-NSSAI-1, and the network fails to perform NSSAA on the S-NSSAI-2, the AMF may send the allowed NSSAI in step 405, the S-NSSAI-1, and indication information to the NSSF, where the indication information indicates that NSSAA is successfully performed on the S-NSSAI-1. In addition, the AMF may not send the S-NSSAI-2 to the NSSF.

For another example, assuming that NSSAA is successfully performed on both the S-NSSAI-1 and the S-NSSAI-2, the AMF may send the allowed NSSAI in step 405, the S-NSSAI-1, the S-NSSAI-2, and indication information to the NSSF, where the indication information indicates that NSSAA is successfully performed on the S-NSSAI-1 and the S-NSSAI-2. Alternatively, the AMF may send the allowed NSSAI in step 405, the S-NSSAI-1, the S-NSSAI-2, indication information 1, and indication information 2 to the NSSF, where the indication information 1 indicates that NSSAA is successfully performed on the S-NSSAI-1, and the indication information 2 indicates that NSSAA is successfully performed on the S-NSSAI-2.

Example 2 in the foregoing examples is continued. The pending NSSAI includes the S-NSSAI-1 and the S-NSSAI-2, and the S-NSSAI-1 and the S-NSSAI-2 are respectively mapped to the S-NSSAI-A and the S-NSSAI-B. Assuming that the network successfully performs NSSAA on the S-NSSAI-1, and the network fails to perform NSSAA on the S-NSSAI-2, the AMF may send the allowed NSSAI in step 405, the S-NSSAI-A, and indication information to the NSSF, where the indication information indicates that NSSAA is successfully performed on the S-NSSAI-A. In addition, the AMF may not send the S-NSSAI-B to the NSSF.

For another example, assuming that NSSAA is successfully performed on both the S-NSSAI-1 and the S-NSSAI-2, the AMF may send the allowed NSSAI in step 405, the S-NSSAI-A, the S-NSSAI-B, and indication information to the NSSF, where the indication information indicates that NSSAA is successfully performed on the S-NSSAI-A and the S-NSSAI-B. Alternatively, the AMF may send the allowed NSSAI in step 405, the S-NSSAI-A, the S-NSSAI-B, indication information 1, and indication information 2 to the NSSF, where the indication information 1 indicates that NSSAA is successfully performed on the S-NSSAI-A, and the indication information 2 indicates that NSSAA is successfully performed on the S-NSSAI-B.

In an implementation method, in step 407, the AMF may carry, by invoking a service-oriented operation Nnssf_Selection_get of the NSSF, the S-NSSAI on which NSSAA is successfully performed. Optionally, indication information indicates that NSSAA is successfully performed on the S-NSSAI is further sent.

In another implementation method, in step 407, the AMF may further carry, by invoking a service-oriented operation Nnssf_quota management_UE counting request of the NSSF, the S-NSSAI on which NSSAA is successfully performed. Optionally, indication information indicates that NSSAA is successfully performed on the S-NSSAI is further carried.

Step 407 is used to trigger the NSSF to perform user counting on the S-NSSAI on which NSSAA is successfully performed in the pending NSSAI.

Step 408: The NSSF performs, based on the indication information, user counting on the S-NSSAI on which NSSAA is successfully performed in the pending NSSAI.

If a quantity of users of a slice corresponding to the S-NSSAI on which NSSAA is successfully performed in the pending NSSAI plus 1 does not exceed a maximum quantity of users allowed by the slice corresponding to the S-NSSAI, the NSSF performs user counting on the S-NSSAI, and adds the S-NSSAI to the allowed NSSAI sent by the AMF in step 407. If the quantity of users of the slice corresponding to the S-NSSAI plus 1 exceeds the maximum quantity of users allowed by the slice corresponding to the S-NSSAI, the NSSF does not perform user counting on the S-NSSAI, and determines the S-NSSAI as the rejected NSSAI. Optionally, the NSSF further generates a rejection cause value: The quantity of users accessing the slice corresponding to the S-NSSAI has reached the maximum quantity of users allowed by the slice corresponding to the S-NSSAI, or user counting fails to be performed on the S-NSSAI.

Optionally, the NSSF may further determine the S-NSSAI on which NSSAA fails to be performed in the pending NSSAI as the rejected NSSAI. Optionally, the NSSF further generates a rejection cause value: The NSSAA fails.

It should be noted that in step 408, if the NSSF receives the S-NSSAI on which NSSAA is successfully performed in the pending NSSAI from the AMF, but does not receive the indication information indicating that NSSAA is successfully performed on the S-NSSAI from the AMF, the NSSF may determine, based on a message type or a service-oriented operation type in step 407, that the S-NSSAI sent by the AMF to the NSSF is the S-NSSAI on which NSSAA is successfully performed.

Example 1 in the foregoing examples is continued. The pending NSSAI includes the S-NSSAI-1 and the S-NSSAI-2. For example, if the network successfully performs NSSAA on the S-NSSAI-1, the AMF sends, to the NSSF, the S-NSSAI-1 and the indication information indicating that NSSAA is successfully performed on the S-NSSAI-1. If the network fails to perform NSSAA on the S-NSSAI-2, the AMF sends, to the NSSF, the S-NSSAI-2 and indication information indicating that NSSAA fails to be performed on the S-NSSAI-2. After receiving the indication information for the S-NSSAI-1, the NSSF performs user counting on the S-NSSAI-1. Assuming that the user counting succeeds, the NSSF adds the S-NSSAI-1 to the allowed NSSAI in step 405, and determines the S-NSSAI-2 as the rejected NSSAI, to obtain new allowed NSSAI, including the S-NSSAI-1 and the S-NSSAI-3, and obtain the rejected NSSAI, including the S-NSSAI-2.

Example 2 in the foregoing examples is continued. The pending NSSAI includes the S-NSSAI-A and the S-NSSAI-B. For example, if the network successfully performs NSSAA on the S-NSSAI-A, the AMF sends, to the NSSF, the S-NSSAI-A and the indication information indicating that NSSAA is successfully performed on the S-NSSAI-A. If the network fails to perform NSSAA on the S-NSSAI-B, the AMF sends, to the NSSF, the S-NSSAI-B and indication information indicating that NSSAA fails to be performed on the S-NSSAI-B. After receiving the indication information for the S-NSSAI-A, the NSSF performs user counting on the S-NSSAI-A. Assuming that the user counting succeeds, the NSSF adds the S-NSSAI-A to the allowed NSSAI in step 405, and determines the S-NSSAI-B as the rejected NSSAI, to obtain new allowed NSSAI, including the S-NSSAI-A and the S-NSSAI-C, and obtain the rejected NSSAI, including the S-NSSAI-B.

Step 409: The NSSF sends a response message to the AMF, where the response message carries new allowed NSSAI (which may also be referred to as second allowed NSSAI) and/or new rejected NSSAI (which may also be referred to as second rejected NSSAI).

If the rejected NSSAI is carried, optionally, a cause value for rejection of each piece of NSSAI, for example, a failure of the NSSAA or a failure of the user counting, is further carried.

It should be noted that, if the AMF sends the first allowed NSSAI to the NSSF in step 407, the second allowed NSSAI herein includes the S-NSSAI in the first allowed NSSAI and the S-NSSAI on which the user counting succeeds and NSSAA is successfully performed in the pending NSSAI. The second rejected NSSAI herein includes the S-NSSAI on which NSSAA fails to be performed in the pending NSSAI, and/or the S-NSSAI on which NSSAA is successfully performed but user counting fails to be performed in the pending NSSAI, and the second rejected NSSAI does not include the first rejected NSSAI.

Step 410: The AMF sends a configuration update request message to the UE, where the configuration update request message carries the new allowed NSSAI and/or the new rejected NSSAI. Correspondingly, the UE may receive the configuration update request message.

Based on the foregoing embodiment, when determining that user counting needs to be performed on the at least one piece of S-NSSAI in the requested NSSAI, the AMF triggers the NSSF to first perform user counting on S-NSSAI on which NSSAA does not need to be performed, and determines the allowed NSSAI, the pending NSSAI, and the rejected NSSAI. For the S-NSSAI on which NSSAA needs to be performed, the NSSF notifies the NSSF to perform user counting after the AMF successfully performs NSSAA. Then, the NSSF updates the allowed NSSAI and/or determines the rejected NSSAI. In this way, the allowed NSSAI and the rejected NSSAI can be accurately determined, and user counting does not need to be performed on the S-NSSAI on which NSSAA fails to be performed, so that signaling overheads of the user counting can be reduced.

In another implementation method, in step 403, for the S-NSSAI on which both user counting and NSSAA need to be performed, the NSSF may alternatively first perform user counting. If the user counting fails, the NSSF determines the S-NSSAI as the rejected NSSAI. If the user counting succeeds, the NSSF adds the S-NSSAI to the pending NSSAI. Subsequently, after the AMF successfully performs NSSAA on the S-NSSAI, the AMF notifies the NSSF by using the indication information, so that the NSSF adds the S-NSSAI to the allowed NSSAI. If the AMF fails to perform NSSAA on the S-NSSAI, and the AMF notifies the NSSF by using the indication information, the NSSF determines the S-NSSAI as the rejected NSSAI.

To resolve the foregoing problem, based on the network architecture shown in FIG. 1A or FIG. 1B, as shown in FIG. 5, this application provides a communication method. The method is an implementation of Solution 2. On a terminal device side, the method may be performed by UE or a component (such as a chip or a circuit) used for the UE. On a network side, the method may be performed by an AMF or an NSSF or a component (such as a chip or a circuit) used for the AMF or the NSSF. For ease of description, an example in which the UE, the AMF, and the NSSF perform the method is used below for description.

In embodiments, slices corresponding to S-NSSAI in requested NSSAI are classified into the following four types:
A first-type slice is a slice that is in the requested NSSAI and on which both NSSAA and user counting need to be performed.
A second-type slice is a slice that is in the requested NSSAI and on which NSSAA does not need to be performed but user counting needs to be performed.
A third-type slice is a slice that is in the requested NSSAI and on which NSSAA needs to be performed but user counting does not need to be performed.
A fourth-type slice is a slice that is in the requested NSSAI and on which NSSAA does not need to be performed and user counting does not need to be performed.

In embodiments, slice authentication may also be referred to as NSSAA.

In embodiments, user counting results include that user counting succeeds and the user counting fails. That the user counting succeeds means that a total quantity of users in a slice plus 1 does not exceed a maximum quantity of users allowed by the slice. That the user counting fails means that the total quantity of users in the slice plus 1 exceeds the maximum quantity of users allowed by the slice.

The method in embodiments includes the following steps.

Step 501: The AMF obtains identification information of a first-type slice that the UE requests to access.

Step 502: If determining that a slice authentication result corresponding to the first-type slice is that slice authentication succeeds, the AMF sends the identification information of the first-type slice and indication information to the NSSF, where the indication information indicates the NSSF to perform user counting on the first-type slice.

Certainly, if the AMF determines that the slice authentication result corresponding to the first-type slice is that the slice authentication fails, the AMF determines to reject access of the UE to the first-type slice.

Step 503: The NSSF performs user counting on the first-type slice.

Step 504: The NSSF sends a user counting result corresponding to the first-type slice to the AMF. Correspondingly, the AMF may receive the user counting result corresponding to the first-type slice.

Step 505: The AMF determines, based on the user counting result corresponding to the first-type slice, whether to allow access of the UE to the first-type slice.

For example, if the user counting result corresponding to the first-type slice is that the user counting succeeds, the AMF determines to allow access of the UE to the first-type slice. That is, if the AMF determines that the slice authentication result corresponding to the first-type slice is that the slice authentication succeeds, and the corresponding user counting result is that the user counting succeeds, the AMF determines to allow access of the UE to the first-type slice.

For another example, if the user counting result corresponding to the first-type slice is that the user counting fails, the AMF determines to reject access of the UE to the first-type slice. That is, if the AMF determines that the slice authentication result corresponding to the first-type slice is that the slice authentication succeeds, but the corresponding user counting result is that the user counting fails, the AMF determines to reject access of the UE to the first-type slice.

Based on the foregoing embodiment, for a slice on which both user counting and slice authentication need to be performed, the AMF first performs slice authentication, and sends identification information of the slice to the NSSF when a slice authentication result is a success. The NSSF performs user counting on the slice and returns a user counting result to the AMF, so that the AMF determines, based on the user counting result, whether to allow access of the UE to the slice. According to the method, whether to allow access of the UE to a specific slice can be accurately determined. In addition, for a slice on which slice authentication fails to be performed, user counting does not need to be performed, so that signaling overheads of the user counting can be reduced.

The foregoing is an implementation method for determining, by the AMF, whether access of the UE to any first-type slice is allowed.

For a second-type slice, because only user counting needs to be performed and slice authentication does not need to be performed, the AMF sends identification information of the second-type slice and indication information to the NSSF, where the indication information indicates the NSSF to perform user counting on the second-type slice. In addition, the NSSF sends a user counting result corresponding to the second-type slice to the AMF. If the user counting result corresponding to the second-type slice is that the user counting succeeds, the AMF determines to allow access of the UE to the second-type slice. If the user counting result corresponding to the second-type slice is that the user counting fails, the AMF determines to reject access of the UE to the second-type slice.

For a third-type slice, because only slice authentication needs to be performed and user counting does not need to be performed, the AMF obtains an authentication result corresponding to the third-type slice. If the slice authentication result corresponding to the third-type slice is that the slice authentication succeeds, the AMF determines to allow access of the UE to the third-type slice. If the slice authentication result corresponding to the third-type slice is that the slice authentication fails, the AMF determines to reject access of the UE to the third-type slice.

For a fourth-type slice, because neither slice authentication nor user counting needs to be performed, the AMF may directly determine to allow access of the UE to the fourth-type slice.

It should be noted that for the foregoing four types of slices, the NSSF and the AMF may separately determine, through an independent process, whether to allow access of the UE to each type of slice. Certainly, the NSSF and the AMF may alternatively determine, through a unified process, whether to allow access of the UE to each type of slice. For example, for both the first-type slice and the second-type slice, because the NSSF needs to perform user counting, the AMF may send the identification information of the first-type slice and the identification information of the second-type slice to the NSSF in one step, and receive the user counting result corresponding to the first-type slice and the user counting result corresponding to the second-type slice from the NSSF in one step.

In conclusion, the embodiment corresponding to FIG. 5 discloses the following technical solutions:
A mobility management network element obtains identification information of a first slice that a terminal device requests to access and identification information of a second slice that the terminal device requests to access, where the first slice is a slice on which slice authentication needs to be performed. If the mobility management network element determines that a slice authentication result corresponding to the first slice is that the slice authentication succeeds, the mobility management network element sends the identification information of the first slice, the identification information of the second slice, and indication information to a network slice selection network element, where the indication information indicates the network slice selection network element to perform user counting on the first slice and the second slice. The mobility management network element receives a user counting result corresponding to the first slice and a user counting result corresponding to the second slice from the network slice selection network element. The mobility management network element separately determines, based on the user counting result corresponding to the first slice and the user counting result corresponding to the second slice, whether to allow access of the terminal device to the first slice and the second slice. The first slice herein includes the foregoing first-type slice, and the second slice herein includes the foregoing second-type slice.

In a possible implementation method, that the mobility management network element separately determines, based on the user counting result corresponding to the first slice and the user counting result corresponding to the second slice, whether to allow access of the terminal device to the first slice includes: If the user counting result corresponding to the first slice or the user counting result corresponding to the second slice is that the user counting succeeds, the mobility management network element determines to allow access of the terminal device to the first slice or the second slice; or if the user counting result corresponding to the first slice or the user counting result corresponding to the second slice is that the user counting fails, the mobility management network element determines to reject access of the terminal device to the first slice or the second slice.

The following describes the process shown in FIG. 5 with reference to a specific example shown in FIG. 6. FIG. 6 is a schematic flowchart of another communication method according to this application.

This embodiment is summarized as follows: When an AMF determines, based on subscription data of UE, that both user counting and NSSAA need to be performed on one or more pieces of S-NSSAI (where S-NSSAI-1 is used as an example below) in requested NSSAI, the AMF determines not to interact with an NSSF first, but first performs an NSSAA process. If the AMF successfully performs NSSAA on the S-NSSAI-1, the AMF requests the NSSF to perform user counting on the S-NSSAI-1. Then, the AMF determines new allowed NSSAI and new rejected NSSAI based on a user counting result.

The method includes the following steps.

Step 601: The UE initiates a registration process, and sends a registration request message to the AMF, where the registration request message carries requested NSSAI.

Step 602: The AMF determines one or more of allowed NSSAI, rejected NSSAI, and pending NSSAI based on the subscription data of the UE and the requested NSSAI.

For specific content of the subscription data of the UE, refer to the examples in step 402 and Table 2.

The allowed NSSAI includes S-NSSAI on which neither user counting nor NSSAA needs to be performed in the requested NSSAI. The pending NSSAI includes one or more of the following: S-NSSAI on which NSSAA does not need to be performed but user counting needs to be performed in the requested NSSAI, S-NSSAI on which both NSSAA and user counting need to be performed in the requested NSSAI, and S-NSSAI on which NSSAA needs to be performed but user counting does not need to be performed in the requested NSSAI. The rejected NSSAI includes S-NSSAI that is unavailable for the UE in a current area in the requested NSSAI.

Optionally, in step 602, the AMF further generates a cause value, to indicate that a cause for pending is waiting for NSSAA or user counting.

In Example 1, in this embodiment of this application, that the requested NSSAI in step 601 includes S-NSSAI-1, S-NSSAI-2, S-NSSAI-3, and S-NSSAI-4 is used as an example. It can be learned from Table 2 that both NSSAA and user counting need to be performed on the S-NSSAI-1, only NSSAA needs to be performed on the S-NSSAI-2, neither NSSAA nor user counting needs to be performed on the S-NSSAI-3, and only user counting needs to be performed but NSSAA does not need to be performed on the S-NSSAI-4.

Based on this example, the AMF determines that the allowed NSSAI includes the S-NSSAI-3, and the pending NSSAI includes the S-NSSAI-1, the S-NSSAI-2, and the S-NSSAI-4.

In Example 2, in this embodiment of this application, that the requested NSSAI in step 601 includes S-NSSAI-A, S-NSSAI-B, S-NSSAI-C, and S-NSSAI-D is used as an example. The S-NSSAI-A is mapped to the S-NSSAI-1, the S-NSSAI-B is mapped to the S-NSSAI-2, the S-NSSAI-C is mapped to the S-NSSAI-3, and the S-NSSAI-D is mapped to the S-NSSAI-4. It can be learned from Table 2 that both NSSAA and user counting need to be performed on the S-NSSAI-1, only NSSAA needs to be performed on the S-NSSAI-2, neither NSSAA nor user counting needs to be performed on the S-NSSAI-3, and only user counting needs to be performed but NSSAA does not need to be performed on the S-NSSAI-4. In this case, it may also be understood as that both NSSAA and user counting need to be performed on the S-NSSAI-A, only NSSAA needs to be performed on the S-NSSAI-B, neither NSSAA nor user counting needs to be performed on the S-NSSAI-C, and only user counting needs to be performed but NSSAA does not need to be performed on the S-NSSAI-D.

It should be noted that, in the present invention, a method used by the AMF to determine the allowed NSSAI, the pending NSSAI, and the rejected NSSAI is not limited to the descriptions in step 602, and may further include another method or condition. For example, when the requested NSSAI includes only the S-NSSAI-1, a quantity of S-NSSAI included in the allowed NSSAI is 0 or the allowed NSSAI is empty. For another example, when the requested NSSAI includes the S-NSSAI-1 and the S-NSSAI-3, and the S-NSSAI-3 is unavailable in an area in which the UE is currently located, the pending NSSAI includes the S-NSSAI-1, the rejected NSSAI includes the S-NSSAI-3, and the AMF may further determine a cause value, to indicate a cause for which the S-NSSAI in the rejected NSSAI is rejected is that the S-NSSAI is unavailable in the current area.

Step 603: The AMF sends a registration accept message to the UE, where the registration accept message carries one or more of the allowed NSSAI (which may also be referred to as first allowed NSSAI), the rejected NSSAI (which may also be referred to as first rejected NSSAI), and the pending NSSAI.

It should be noted that if the allowed NSSAI is empty, in step 603, the AMF does not need to send the allowed NSSAI or sends empty allowed NSSAI to the UE. If the pending NSSAI is empty, in step 603, the pending NSSAI does not need to be sent or empty pending NSSAI is sent to the UE. If the rejected NSSAI is empty, in step 603, the rejected NSSAI does not need to be sent or empty rejected NSSAI is sent to the UE.

Step 604: The AMF performs an NSSAA process on S-NSSAI on which NSSAA needs to be performed in the pending NSSAI.

The S-NSSAI on which NSSAA needs to be performed in the pending NSSAI includes the S-NSSAI on which both NSSAA and user counting need to be performed in the requested NSSAI and the S-NSSAI on which NSSAA needs to be performed but user counting does not need to be performed in the requested NSSAI.

For specific implementation details of performing, by the AMF, the NSSAA process on the S-NSSAI, refer to related descriptions of step 205 in a current technology. Details are not described herein again.

According to Example 1 in the foregoing examples, the AMF separately performs the NSSAA process on the S-NSSAI-1 and the S-NSSAI-2.

According to Example 2 in the foregoing examples, the AMF separately performs the NSSAA process on S-NSSAI-1 and S-NSSAI-2, where the S-NSSAI-1 and the S-NSSAI-2 are respectively mapped to the S-NSSAI-A and the S-NSSAI-B in the pending NSSAI.

Step 605: The AMF determines first NSSAI.

The first NSSAI includes S-NSSAI on which NSSAA does not need to be performed but user counting needs to be performed in the pending NSSAI, and/or S-NSSAI on which both user counting and NSSAA need to be performed and whose NSSAA result is a success in the pending NSSAI.

Example 1 in the foregoing examples is continued. Assuming that a result of performing the NSSAA process by the AMF on the S-NSSAI-1 is a success, and a result of performing the NSSAA process on the S-NSSAI-2 is a failure, the first NSSAI includes the S-NSSAI-1 and the S-NSSAI-4.

Example 2 in the foregoing examples is continued. Assuming that a result of performing the NSSAA process by the AMF on the S-NSSAI-A is a success, and a result of performing the NSSAA process on the S-NSSAI-B is a failure, the first NSSAI includes the S-NSSAI-A and the S-NSSAI-D.

Step 606: The AMF sends the first NSSAI to the NSSF.

Optionally, the AMF sends indication information to the NSSF, where the indication information indicates that a result of performing NSSAA on S-NSSAI on which the NSSAA process needs to be performed in the first NSSAI is a success.

It should be noted that, that the NSSAA result of the S-NSSAI in the first NSSAI is a success may have two meanings:
Meaning 1: If the S-NSSAI in the first NSSAI belongs to subscribed S-NSSAI, and NSSAA needs to be performed on the subscribed S-NSSAI and the NSSAA succeeds, the NSSAAresult of the S-NSSAI in the first NSSAI is a success.
Meaning 2: If the S-NSSAI in the first NSSAI is mapped to subscribed S-NSSAI, and NSSAA is performed on the subscribed S-NSSAI and the NSSAA succeeds, the NSSAA result of the S-NSSAI in the first NSSAI is a success.

Example 1 in the foregoing examples is continued. Assuming that a result of performing the NSSAA process by the AMF on the S-NSSAI-1 is a success, the first NSSAI includes the S-NSSAI-1 and the S-NSSAI-4, and the AMF sends, to the NSSF, the S-NSSAI-1 and indication information indicating that the result of performing NSSAA on the S-NSSAI-1 is a success.

Example 2 in the foregoing examples is continued. Assuming that a result of performing the NSSAA process by the AMF on the S-NSSAI-1 is a success, and the S-NSSAI-1 is mapped to the S-NSSAI-A, the first NSSAI includes the S-NSSAI-A and the S-NSSAI-D, and the AMF sends, to the NSSF, the S-NSSAI-A and indication information indicating that a result of performing NSSAA on the S-NSSAI-A is a success.

For example, the AMF may carry the first NSSAI by invoking a service-oriented operation Nnssf_Selection_get of the NSSF. Optionally, the AMF may further carry the first NSSAI by invoking a service-oriented operation Nnssf_quota management_UE counting request of the NSSF.

Step 607: The NSSF generates a user counting result of the S-NSSAI in the first NSSAI.

For each piece of S-NSSAI in the first NSSAI, if a quantity of current users in the S-NSSAI plus 1 does not exceed a maximum quantity of users allowed by a slice corresponding to the S-NSSAI, user counting is performed on the S-NSSAI (that is, an operation of increasing the quantity of users by 1 is performed), and the user counting result is generated as a success. If the quantity of current users in the S-NSSAI plus 1 exceeds the maximum quantity of users allowed by the slice corresponding to the S-NSSAI, user counting is not performed on the S-NSSAI (that is, the operation of increasing the quantity of users by 1 is not performed), and the user counting result is generated as a failure.

Step 608: The NSSF sends the user counting result of the S-NSSAI in the first NSSAI to the AMF.

For example, the AMF may carry the user counting result of the S-NSSAI in the first NSSAI by invoking a service-oriented operation Nnssf_Selection_response or Nnssf_quota management_UE counting response of the NSSF.

It should be noted that the foregoing step 606 to step 608 are optional steps. When the first NSSAI determined in step 605 is empty, step 606 to step 608 do not need to be performed.

Example 1 in the foregoing examples is continued. Assuming that the first NSSAI includes the S-NSSAI-1 and the S-NSSAI-4, and if a result of performing user counting by the NSSF on the S-NSSAI-1 is a success, the NSSF sends, to the AMF, the result of performing user counting on the S-NSSAI-1 being a success. If a result of performing user counting by the NSSF on the S-NSSAI-4 is a success, the NSSF sends, to the AMF, the result of performing user counting on the S-NSSAI-4 being a success. If the result of performing user counting by the NSSF on the S-NSSAI-1 is a failure, the NSSF sends, to the AMF, the result of performing user counting on the S-NSSAI-1 being a failure, and sends a cause value for the failure: A quantity of users accessing a slice corresponding to the S-NSSAI-1 has reached a maximum quantity of users allowed by the slice corresponding to the S-NSSAI-1. If the result of performing user counting by the NSSF on the S-NSSAI-4 is a failure, the NSSF sends, to the AMF, the result of performing user counting on the S-NSSAI-4 being a failure, and sends a cause value for the failure: A quantity of users accessing a slice corresponding to the S-NSSAI-4 has reached a maximum quantity of users allowed by the slice corresponding to the S-NSSAI-4.

Example 2 in the foregoing examples is continued. Assuming that the first NSSAI includes the S-NSSAI-A and the S-NSSAI-D, and if a result of performing user counting by the NSSF on the S-NSSAI-A is a success, the NSSF sends, to the AMF, the result of performing user counting on the S-NSSAI-A being a success. If a result of performing user counting by the NSSF on the S-NSSAI-D is a success, the NSSF sends, to the AMF, the result of performing user counting on the S-NSSAI-D being a success. If the result of performing user counting by the NSSF on the S-NSSAI-A is a failure, the NSSF sends, to the AMF, the result of performing user counting on the S-NSSAI-A being a failure, and sends a cause value for the failure: A quantity of users accessing a slice corresponding to the S-NSSAI-A has reached a maximum quantity of users allowed by the slice corresponding to the S-NSSAI-A. If the result of performing user counting by the NSSF on the S-NSSAI-D is a failure, the NSSF sends, to the AMF, the result of performing user counting on the S-NSSAI-D being a failure, and sends a cause value for the failure: A quantity of users accessing a slice corresponding to the S-NSSAI-D has reached a maximum quantity of users allowed by the slice corresponding to the S-NSSAI-D.

Step 609: The AMF determines the rejected NSSAI (which may also be referred to as second rejected NSSAI) and/or new allowed NSSAI (which may also be referred to as second allowed NSSAI).

When step 606 to step 608 are performed, the AMF adds, to the allowed NSSAI determined in step 602, S-NSSAI on which user counting does not need to be performed but NSSAA needs to be performed and whose NSSAA result is a success in the pending NSSAI, and S-NSSAI whose user counting result is a success in the first NSSAI, to obtain the new allowed NSSAI. The AMF determines S-NSSAI on which NSSAA needs to be performed and whose NSSAA result is a failure in the pending NSSAI and/or S-NSSAI whose user counting result is a failure in the first NSSAI as the rejected NSSAI (the second rejected NSSAI).

When step 606 to step 608 are not performed, it indicates that there is no S-NSSAI on which user counting needs to be performed in the pending NSSAI, or it is understood as that only the NSSAA process needs to be performed on S-NSSAI in the pending NSSAI. Therefore, the AMF adds, to the allowed NSSAI determined in step 602, the S-NSSAI whose NSSAA result is a success in the pending NSSAI, to obtain the new allowed NSSAI. The AMF determines the S-NSSAI whose NSSAA result is a failure in the pending NSSAI as the rejected NSSAI.

It should be noted that the second allowed NSSAI herein includes the S-NSSAI in the first allowed NSSAI and the S-NSSAI on which the user counting succeeds and NSSAA is successfully performed in the pending NSSAI. The second rejected NSSAI herein includes the S-NSSAI on which NSSAA fails to be performed in the pending NSSAI, and/or the S-NSSAI on which NSSAA is successfully performed but user counting fails to be performed in the pending NSSAI, and the second rejected NSSAI does not include the first rejected NSSAI.

Example 1 in the foregoing examples is continued. If both results of performing user counting by the NSSF on the S-NSSAI-1 and the S-NSSAI-4 are a success, the new allowed NSSAI determined by the AMF includes the S-NSSAI-1, the S-NSSAI-3, and the S-NSSAI-4, and the rejected NSSAI includes the S-NSSAI-2. Optionally, a rejection cause value, namely, a failure of the NSSAA, is further generated.

Example 2 in the foregoing examples is continued. If both results of performing user counting by the NSSF on the S-NSSAI-A and the S-NSSAI-D are a success, the new allowed NSSAI determined by the AMF includes the S-NSSAI-A, the S-NSSAI-C, and the S-NSSAI-D, and the rejected NSSAI includes the S-NSSAI-B. Optionally, a rejection cause value, namely, a failure of the NSSAA, is further generated.

Step 610: The AMF sends a configuration update request message to the UE, where the configuration update request message carries the rejected NSSAI and/or the new allowed NSSAI. Correspondingly, the UE may receive the configuration update request message.

Based on the foregoing embodiment, if the AMF determines that the NSSAA process or user counting needs to be performed on one or more pieces of S-NSSAI in the requested NSSAI, the AMF preferentially triggers the NSSAA process. After the NSSAA process ends, the AMF further determines whether there is still S-NSSAI on which user counting needs to be performed in the requested NSSAI. If there is the S-NSSAI, the AMF interacts with the NSSF to trigger the NSSF to perform user counting. Then, the AMF determines the rejected NSSAI and/or the new allowed NSSAI based on a user counting result. In this way, the allowed NSSAI and the rejected NSSAI can be accurately determined, and user counting does not need to be performed on the S-NSSAI on which NSSAA fails to be performed, so that overheads of the user counting can be reduced.

In the foregoing embodiment, the AMF determines the rejected NSSAI and the new allowed NSSAI. In another implementation method, the NSSF may alternatively determine the rejected NSSAI and the new allowed NSSAI, and send the rejected NSSAI and the new allowed NSSAI to the AMF. For example, the foregoing step 605 to step 610 may be replaced with the following step 605' to step 608'.

Step 605': The AMF sends a request message to the NSSF, where the request message carries the requested NSSAI, the subscription data of the UE, and an NSSAA result of NSSAI on which NSSAA needs to be performed in the pending NSSAI. The NSSAA result is that the NSSAA succeeds or the NSSAA fails.

Optionally, the request message may be a service-oriented operation Nnssf_Selection_get or Nnssf_quota management_UE counting request of the NSSF.

Step 606': The NSSF determines the rejected NSSAI (which may also be referred to as second rejected NSSAI) and/or new allowed NSSAI (which may also be referred to as second allowed NSSAI).

The NSSF determines second NSSAI based on the subscription data of the UE, the requested NSSAI, and the NSSAA result of the pending NSSAI on which NSSAA needs to be performed. The second NSSAI includes the S-NSSAI on which user counting needs to be performed but NSSAA does not need to be performed in the requested NSSAI, and includes S-NSSAI on which both NSSAA and user counting need to be performed and whose NSSAA result is that the NSSAA succeeds in the requested NSSAI. Then, the NSSF determines whether user counting can be successfully performed on S-NSSAI in the second NSSAI, and generates the rejected NSSAI and/or the new allowed NSSAI based on a user counting result.

It should be noted that, for S-NSSAI on which user counting and NSSAA need to be performed and whose NSSAA result is that the NSSAA fails, whether the user counting can succeed is not determined.

The rejected NSSAI includes S-NSSAI on which NSSAA needs to be performed and whose NSSAA result is that the NSSAA fails in the requested NSSAI, and/or S-NSSAI on which NSSAA and user counting need to be performed and whose NSSAA result is that the NSSAA succeeds but user counting result is a failure in the requested NSSAI.

The new allowed NSSAI includes S-NSSAI on which neither user counting nor NSSAA needs to be performed in the requested NSSAI, and/or S-NSSAI on which NSSAA and user counting need to be performed and whose NSSAA result and user counting result are both that the NSSAA succeeds in the requested NSSAI.

Step 607': The NSSF sends a response message to the AMF.

The response message carries the rejected NSSAI and/or the new allowed NSSAI.

If the rejected NSSAI is carried, optionally, a cause value for rejection of each piece of NSSAI, for example, a failure of the NSSAA or a failure of the user counting, is further carried.

Optionally, the response message may be a service-oriented operation Nnssf_Selection_Response or Nnssf_quota management_UE counting response of the NSSF.

Step 608': The AMF sends a configuration update request message to the UE, where the configuration update request message carries the rejected NSSAI and/or the new allowed NSSAI. Correspondingly, the UE may receive the configuration update request message.

The foregoing mainly describes the solutions provided in this application from a perspective of interaction between network elements. It may be understood that, to implement the foregoing functions, each network element includes a corresponding hardware structure and/or software module for implementing each function. A person skilled in the art should easily be aware that, in combination with the units and algorithm steps in the examples described in embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

It may be understood that in the foregoing method embodiments, corresponding steps or operations implemented by the mobility management network element may alternatively be implemented by a component (for example, a chip or a circuit) disposed in the mobility management network element, and corresponding steps or operations implemented by the network slice selection network element may alternatively be implemented by a component (for example, a chip or a circuit) disposed in the network slice selection network element.

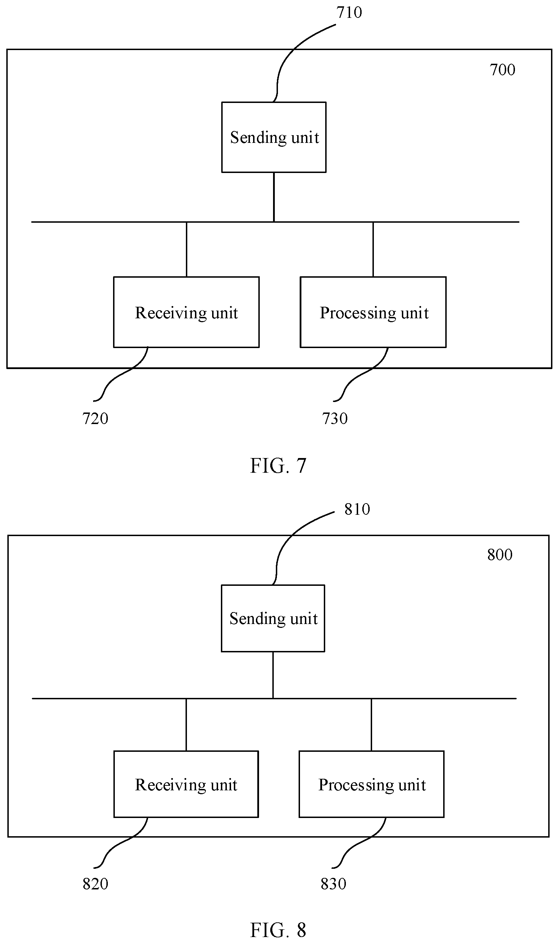

FIG. 7 is a schematic diagram of a communication apparatus according to an embodiment of this application. The apparatus is configured to implement the steps performed by the corresponding mobility management network element in the foregoing method embodiments. As shown in FIG. 7, the apparatus 700 includes a sending unit 710, a receiving unit 720, and a processing unit 730.

### In the first embodiment:

The receiving unit 720 is configured to receive the identification information of the first slice from the network slice selection network element, where the first slice is the slice on which slice authentication needs to be performed. The processing unit 730 is configured to obtain the slice authentication result corresponding to the first slice. The sending unit 710 is configured to send the slice authentication result corresponding to the first slice to the network slice selection network element, where the slice authentication result corresponding to the first slice is used by the network slice selection network element to determine whether to allow access of the terminal device to the first slice.

In a possible implementation method, the receiving unit 720 is further configured to receive allowed NSSAI from the network slice selection network element. The allowed NSSAI indicates identification information corresponding to a slice to which access of the terminal device is allowed, the slice to which access of the terminal device is allowed is a slice on which slice authentication succeeds and user counting succeeds, and the allowed NSSAI includes the identification information of the first slice.

In a possible implementation method, the receiving unit 720 is further configured to receive rejected NSSAI from the network slice selection network element. The rejected NSSAI indicates identification information corresponding to a slice to which access of the terminal device is rejected, the slice to which access of the terminal device is rejected is a slice on which slice authentication fails or user counting fails, and the rejected NSSAI includes the identification information of the first slice.

### In the second embodiment:

The receiving unit 720 is configured to: obtain identification information of a first slice that a terminal device requests to access and identification information of a second slice that the terminal device requests to access, where the first slice is a slice on which slice authentication needs to be performed. The sending unit 710 is configured to: if the processing unit 730 determines that a slice authentication result corresponding to the first slice is that the slice authentication succeeds, send the identification information of the first slice, the identification information of the second slice, and indication information to a network slice selection network element, where the indication information indicates the network slice selection network element to perform user counting on the first slice and the second slice. The receiving unit 720 is further configured to receive a user counting result corresponding to the first slice and a user counting result corresponding to the second slice from the network slice selection network element. The processing unit 730 is configured to separately determine, based on the user counting result corresponding to the first slice and the user counting result corresponding to the second slice, whether to allow access of the terminal device to the first slice and the second slice.

In a possible implementation method, that the processing unit 730 is configured to separately determine, based on the user counting result corresponding to the first slice and the user counting result corresponding to the second slice, whether to allow access of the terminal device to the first slice specifically includes: configured to: if the user counting result corresponding to the first slice or the user counting result corresponding to the second slice is that the user counting succeeds, determine to allow access of the terminal device to the first slice or the second slice; or configured to: if the user counting result corresponding to the first slice or the user counting result corresponding to the second slice is that the user counting fails, determine to reject access of the terminal device to the first slice or the second slice.

It may be understood that the foregoing units may also be referred to as modules, circuits, or the like, and the foregoing units may be independently disposed, or may be completely or partially integrated.

In some possible implementations, the sending unit 710 and the receiving unit 720 may alternatively be implemented by a transceiver unit, or the sending unit 710 and the receiving unit 720 may be collectively referred to as a transceiver unit. The sending unit 710, the receiving unit 720, or the transceiver unit may also be referred to as a communication interface, and the processing unit may also be referred to as a processor.

Optionally, the communication apparatus 700 may further include a storage unit. The storage unit is configured to store data or instructions (which may also be referred to as code or a program). The foregoing units may interact with or be coupled to the storage unit, to implement a corresponding method or function. For example, the processing unit may read the data or the instructions in the storage unit, so that the communication apparatus implements the methods in the foregoing embodiments.

FIG. 8 is a schematic diagram of a communication apparatus according to an embodiment of this application. The apparatus is configured to implement the steps performed by the corresponding network slice selection network element in the foregoing method embodiment. As shown in FIG. 8, the apparatus 800 includes a sending unit 810, a receiving unit 820, and a processing unit 830.

### In the first embodiment:

The sending unit 810 is configured to: send identification information of a first slice to the mobility management network element, where the first slice is a slice on which both slice authentication and user counting need to be performed. The receiving unit 820 is configured to receive a slice authentication result corresponding to the first slice from the mobility management network element. The processing unit 830 is configured to: if the slice authentication result corresponding to the first slice is that the slice authentication succeeds, perform user counting on the first slice; and determine, based on a user counting result corresponding to the first slice, whether to allow access of the terminal device to the first slice.

In a possible implementation, that the processing unit 830 is configured to determine, based on the user counting result corresponding to the first slice, whether to allow access of a terminal device to the first slice specifically includes:
configured to: if the user counting result corresponding to the first slice is that the user counting succeeds, determine to allow access of the terminal device to the first slice; or configured to: if the user counting result corresponding to the first slice is that the user counting fails, determine to reject access of the terminal device to the first slice.

In a possible implementation, the processing unit 830 is further configured to: if the slice authentication result corresponding to the first slice is that the slice authentication fails, determine to reject access of the terminal device to the first slice.

In a possible implementation, the sending unit 810 is further configured to: before the receiving unit 820 receives the slice authentication result corresponding to the first slice from the mobility management network element, send indication information to the mobility management network element, where the indication information indicates the mobility management network element to send the slice authentication result corresponding to the first slice to the network slice selection network element.

In a possible implementation, the receiving unit 820 is further configured to: before the sending unit 810 sends the identification information of a first slice to the mobility management network element, receive requested network slice selection assistance information NSSAI from the mobility management network element, where the requested NSSAI includes identification information of a slice that the terminal device requests to access, and the requested NSSAI includes the identification information of the first slice. The processing unit 830 is further configured to determine allowed NSSAI based on the requested NSSAI, where the allowed NSSAI includes identification information of a slice on which neither slice authentication nor user counting needs to be performed in the requested NSSAI.

In a possible implementation, the processing unit 830 is further configured to: before the sending unit 810 sends the identification information of the first slice to the mobility management network element, if the slice authentication result corresponding to the first slice is that the slice authentication succeeds and the user counting result corresponding to the first slice is that the user counting succeeds, determine that the allowed NSSAI includes the identification information of the first slice. The sending unit 810 is further configured to send the allowed NSSAI to the mobility management network element.

In a possible implementation, the processing unit 830 is further configured to: perform user counting on a second slice, where the second slice is a slice on which user counting needs to be performed but slice authentication does not need to be performed, and if a user counting result corresponding to the second slice is that the user counting succeeds, determine to allow access of the terminal device to the second slice; or if a user counting result corresponding to the second slice is that the user counting fails, determine to reject access of the terminal device to the second slice.

In a possible implementation, the sending unit 810 is further configured to send identification information of a third slice to the mobility management network element, where the third slice is a slice on which slice authentication needs to be performed but user counting does not need to be performed. The receiving unit 820 is further configured to receive a slice authentication result corresponding to the third slice from the mobility management network element. The processing unit 830 is further configured to: if the slice authentication result corresponding to the third slice is that the slice authentication succeeds, determine to allow access of the terminal device to the third slice; or if the slice authentication result corresponding to the third slice is that the slice authentication fails, determine to reject access of the terminal device to the third slice.

### In the second embodiment:

The receiving unit 820 is configured to: receive identification information of a first slice and a slice authentication result corresponding to the first slice from the mobility management network element, where the first slice is a slice on which both slice authentication and user counting need to be performed. The processing unit 830 is configured to: if the slice authentication result corresponding to the first slice is that the slice authentication succeeds, perform user counting on the first slice; and determine, based on a user counting result corresponding to the first slice, whether to allow access of the terminal device to the first slice.

In a possible implementation method, that the processing unit 830 is configured to determine, based on the user counting result corresponding to the first slice, whether to allow access of the terminal device to the first slice specifically includes: configured to: if the user counting result corresponding to the first slice is that the user counting succeeds, determine to allow access of the terminal device to the first slice; or configured to: if the user counting result corresponding to the first slice is that the user counting fails, determine to reject access of the terminal device to the first slice.

In a possible implementation method, the processing unit 830 is further configured to: if the slice authentication result corresponding to the first slice is that the slice authentication fails, determine to reject access of the terminal device to the first slice.

In a possible implementation method, the receiving unit 820 is configured to receive identification information of a second slice from the mobility management network element, where the second slice is a slice on which user counting needs to be performed but slice authentication does not need to be performed. The processing unit 830 is further configured to: if a user counting result corresponding to the second slice is that the user counting succeeds, determine to allow access of the terminal device to the second slice; or if a user counting result corresponding to the second slice is that the user counting fails, determine to reject access of the terminal device to the second slice.

In a possible implementation method, the receiving unit 820 is configured to receive identification information of a third slice and a slice authentication result corresponding to the third slice from the mobility management network element, where the third slice is a slice on which slice authentication needs to be performed but user counting does not need to be performed. The processing unit 830 is further configured to: if the slice authentication result corresponding to the third slice is that the slice authentication succeeds, determine to allow access of the terminal device to the third slice; or if the slice authentication result corresponding to the third slice is that the slice authentication fails, determine to reject access of the terminal device to the third slice.

It may be understood that the foregoing units may also be referred to as modules, circuits, or the like, and the foregoing units may be independently disposed, or may be completely or partially integrated.

In some possible implementations, the sending unit 810 and the receiving unit 820 may alternatively be implemented by a transceiver unit, or the sending unit 810 and the receiving unit 820 may be collectively referred to as a transceiver unit. The sending unit 810, the receiving unit 820, or the transceiver unit may also be referred to as a communication interface, and the processing unit may also be referred to as a processor.

Optionally, the communication apparatus 800 may further include a storage unit. The storage unit is configured to store data or instructions (which may also be referred to as code or a program). The foregoing units may interact with or be coupled to the storage unit, to implement a corresponding method or function. For example, the processing unit may read the data or the instructions in the storage unit, so that the communication apparatus implements the methods in the foregoing embodiments.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware, or some units may be implemented in a form of software invoked by a processing element, and some units may be implemented in a form of hardware. For example, the units may be separately disposed processing elements, or may be integrated into a chip of the apparatus for implementation. In addition, the units may be stored in a memory in a program form, and is invoked by a processing element of the apparatus to perform functions of the units. In addition, all or some of the units may be integrated together, or may be implemented independently. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

For example, a unit in any one of the foregoing apparatuses may be one or more integrated circuits configured to implement the foregoing method, for example, one or more application-specific integrated circuits (Application-Specific Integrated Circuits, ASICs), one or more microprocessors (digital signal processors, DSPs), one or more field programmable gate arrays (Field Programmable Gate Arrays, FPGAs), or a combination of at least two of the integrated circuits. For another example, when the units in the apparatus may be implemented in a form in which a processing element invokes a program, the processing element may be a general-purpose processor, for example, a central processing unit (Central Processing Unit, CPU) or another processor that can invoke the program. For another example, the units may be integrated together and implemented in a form of a system-on-a-chip (system-on-a-chip, SOC).

The foregoing unit for receiving (for example, the receiving unit) is an interface circuit of the apparatus, and is configured to receive a signal from another apparatus. For example, when the apparatus is implemented by a chip, the receiving unit is an interface circuit that is of the chip and that is configured to receive a signal from another chip or apparatus. The foregoing unit for sending (for example, the sending unit) is an interface circuit of the apparatus, and is configured to send a signal to another apparatus. For example, when the apparatus is implemented by a chip, the sending unit is an interface circuit that is of the chip and that is configured to send a signal to another chip or apparatus.

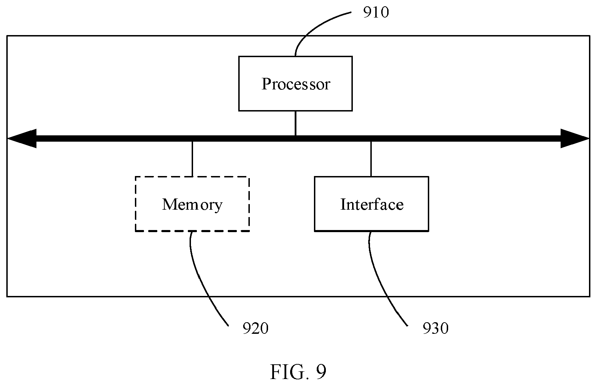

FIG. 9 is a schematic structural diagram of a communication apparatus (which may be a mobility management network element or a network slice selection network element) according to an embodiment of this application. The communication apparatus is configured to implement operations of the mobility management network element or the network slice selection network element in the foregoing embodiments. As shown in FIG. 9, the communication apparatus includes a processor 910 and an interface 930, and optionally, further includes a memory 920. The interface 930 is configured to communicate with another device.

The method performed by the mobility management network element or the network slice selection network element in the foregoing embodiments may be implemented by the processor 910 by invoking a program stored in a memory (which may be the memory 920 in the mobility management network element or the network slice selection network element, or may be an external memory). To be specific, the apparatus used by the mobility management network element or the network slice selection network element may include the processor 910. The processor 910 invokes the program in the memory, to perform the method performed by the policy control network element in the foregoing method embodiments. The processor herein may be an integrated circuit having a signal processing capability, for example, a CPU. The apparatus used by the mobility management network element or the network slice selection network element may be implemented by one or more integrated circuits configured to implement the foregoing methods. For example, one or more ASICs, one or more microprocessors DSPs, one or more FPGAs, or a combination of at least two of these types of integrated circuits. Alternatively, the foregoing implementations may be combined.

All or some of foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the processes or the functions according to embodiments of this application are generated. The computer may be a general-purpose computer, a dedicated computer, a computer network, or other programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid state disk, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

In one or more example designs, the functions described in this application may be implemented by using hardware, software, firmware, or any combination thereof. If the functions are implemented by using the software, these functions may be stored in a computer-readable medium or are transmitted to the computer-readable medium in a form of one or more instructions or code. The computer-readable medium includes a computer storage medium and a communication medium that enables a computer program to move from one place to another. The storage medium may be an available medium that may be accessed by any general-purpose or special computer. For example, such a computer-readable medium may include but is not limited to a RAM, a ROM, an EEPROM, a CD-ROM or another optical disc storage, a disk storage or another magnetic storage apparatus, or any other medium that may be used to bear or store program code, where the program code is in a form of an instruction structure or a data structure or in a form that can be read by a general-purpose or special computer or a general-purpose or special processor. In addition, any connection may be appropriately defined as the computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in the defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data by a magnetic means, and the disk optically copies data by a laser means. The foregoing combination may also be included in the computer-readable medium.

A person skilled in the art should be aware that in the foregoing one or more examples, functions described in this application may be implemented by using hardware, software, firmware, or any combination thereof. When the functions are implemented by using the software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or a special-purpose computer.

## Claims

1. A communication method, comprising:
sending (301), by a network slice selection network element, identification information of a first slice to a mobility management network element, wherein the first slice is a slice on which both slice authentication and user counting need to be performed;
receiving (303), by the network slice selection network element, a slice authentication result corresponding to the first slice from the mobility management network element;
if the slice authentication result corresponding to the first slice is that the slice authentication succeeds, performing (304), by the network slice selection network element, user counting on the first slice; and
determining (305), by the network slice selection network element based on a user counting result corresponding to the first slice, whether to allow access of a terminal device to the first slice,
wherein the determining (305), by the network slice selection network element based on a user counting result corresponding to the first slice, whether to allow access of a terminal device to the first slice comprises:
if the user counting result corresponding to the first slice is that the user counting succeeds, determining (305), by the network slice selection network element, to allow access of the terminal device to the first slice; or
if the user counting result corresponding to the first slice is that the user counting fails, determining (306), by the network slice selection network element, to reject access of the terminal device to the first slice,
wherein that the user counting succeeds means that a total quantity of users in the first slice plus 1 does not exceed a maximum quantity of users allowed by the first slice,
wherein that the user counting fails means that the total quantity of users in the first slice plus 1 Z exceeds the maximum quantity of users allowed by the first slice,
wherein if the slice authentication result corresponding to the first slice is that the slice authentication fails, determining (306), by the network slice selection network element, to reject access of the terminal device to the first slice,
wherein before the receiving (303), by the network slice selection network element, a slice authentication result corresponding to the first slice from the mobility management network element, the method further comprises:
sending (301), by the network slice selection network element, indication information to the mobility management network element, wherein the indication information indicates the mobility management network element to send the slice authentication result corresponding to the first slice to the network slice selection network element,
wherein before the sending (301), by a network slice selection network element, identification information of a first slice to a mobility management network element, the method further comprises:
receiving, by the network slice selection network element, requested network slice selection assistance information, NSSAI, from the mobility management network element, wherein the requested NSSAI comprises identification information of a slice that the terminal device requests to access, and the requested NSSAI comprises the identification information of the first slice; and
determining, by the network slice selection network element, allowed NSSAI based on the requested NSSAI, wherein the allowed NSSAI comprises identification information of a slice on which neither slice authentication nor user counting needs to be performed in the requested NSSAI.

2. The method according to any one of claims 1, further comprising:
performing, by the network slice selection network element, user counting on a second slice, wherein the second slice is a slice on which user counting needs to be performed but slice authentication does not need to be performed; and
if a user counting result corresponding to the second slice is that the user counting succeeds, determining, by the network slice selection network element, to allow access of the terminal device to the second slice; or
if a user counting result corresponding to the second slice is that the user counting fails, determining, by the network slice selection network element, to reject access of the terminal device to the second slice.

3. The method according to any one of claims 1 or 2, further comprising:
sending, by the network slice selection network element, identification information of a third slice to the mobility management network element, wherein the third slice is a slice on which slice authentication needs to be performed but user counting does not need to be performed;
receiving, by the network slice selection network element, a slice authentication result corresponding to the third slice from the mobility management network element; and
if the slice authentication result corresponding to the third slice is that the slice authentication succeeds, determining, by the network slice selection network element, to allow access of the terminal device to the third slice; or
if the slice authentication result corresponding to the third slice is that the slice authentication fails, determining, by the network slice selection network element, to reject access of the terminal device to the third slice.

4. A communication apparatus, comprising means configured to perform the method according to any one of claims 1 to 3.

5. A computer-readable storage medium, wherein the computer-readable storage medium stores a program, and when the program is invoked by a processor, the method according to any one of claims 1 to 3 is performed.

6. A computer program, wherein when the computer program is invoked by a processor, the method according to any one of claims 1 to 3 is performed.

7. A communication system, comprising a network slice selection network element (700) and a mobility management network element (800), wherein
the network slice selection network element (700) is configured to: send identification information of a first slice to the mobility management network element, wherein the first slice is a slice on which both slice authentication and user counting need to be performed; receive a slice authentication result corresponding to the first slice from the mobility management network element; if the slice authentication result corresponding to the first slice is that the slice authentication succeeds, perform user counting on the first slice; and determine, based on a user counting result corresponding to the first slice, whether to allow access of the terminal device to the first slice; and
the mobility management network element (800) is configured to: receive the identification information of the first slice from the network slice selection network element; obtain the slice authentication result corresponding to the first slice; and send the slice authentication result corresponding to the first slice to the network slice selection network element,
wherein the determining, by the network slice selection network element based on a user counting result corresponding to the first slice, whether to allow access of a terminal device to the first slice comprises:
if the user counting result corresponding to the first slice is that the user counting succeeds, determining, by the network slice selection network element, to allow access of the terminal device to the first slice; or
if the user counting result corresponding to the first slice is that the user counting fails, determining, by the network slice selection network element, to reject access of the terminal device to the first slice,
wherein that the user counting succeeds means that a total quantity of users in the first slice plus 1 does not exceed a maximum quantity of users allowed by the first slice,
wherein that the user counting fails means that the total quantity of users in the first slice plus 1 exceeds the maximum quantity of users allowed by the first slice,
wherein if the slice authentication result corresponding to the first slice is that the slice authentication fails, determining, by the network slice selection network element, to reject access of the terminal device to the first slice,
wherein before the receiving, by the network slice selection network element, a slice authentication result corresponding to the first slice from the mobility management network element, the network slice selection network element is configured to send, indication information to the mobility management network element, wherein the indication information indicates the mobility management network element to send the slice authentication result corresponding to the first slice to the network slice selection network element,
wherein before the sending, by a network slice selection network element, identification information of a first slice to a mobility management network element, the network slice selection network element is configured to receive requested network slice selection assistance information, NSSAI, from the mobility management network element, wherein the requested NSSAI comprises identification information of a slice that the terminal device requests to access, and the requested NSSAI comprises the identification information of the first slice; and
the network slice selection network element is configured to determine allowed NSSAI based on the requested NSSAI, wherein the allowed NSSAI comprises identification information of a slice on which neither slice authentication nor user counting needs to be performed in the requested NSSAI.

## Patentansprüche

1. Kommunikationsverfahren, das umfasst:
Senden (301), durch ein Netzwerk-Slice-Auswahlnetzwerkelement, von Identifikationsinformationen eines ersten Slice an ein Mobilitätsverwaltungsnetzwerkelement, wobei der erste Slice ein Slice ist, auf dem sowohl eine Slice-Authentifizierung als auch eine Benutzerzählung durchgeführt werden müssen;
Empfangen (303), durch das Netzwerk-Slice-Auswahlnetzwerkelement, eines Slice-Authentifizierungsergebnisses, das dem ersten Slice entspricht, von dem Mobilitätsverwaltungsnetzwerkelement;
falls das Slice-Authentifizierungsergebnis, das dem ersten Slice entspricht, lautet, dass die Slice-Authentifizierung erfolgreich ist, Durchführen (304), durch das Netzwerk-Slice-Auswahlnetzwerkelement, der Benutzerzählung auf dem ersten Slice; und
Bestimmen (305), durch das Netzwerk-Slice-Auswahlnetzwerkelement basierend auf einem Benutzerzählergebnis, das dem ersten Slice entspricht, ob ein Zugriff eines Endgeräts auf den ersten Slice zugelassen wird,
wobei das Bestimmen (305), durch das Netzwerk-Slice-Auswahlnetzwerkelement basierend auf einem Benutzerzählergebnis, das dem ersten Slice entspricht, ob der Zugriff eines Endgeräts auf das erste Slice zugelassen wird, umfasst:
falls das Benutzerzählergebnis, das dem ersten Slice entspricht, lautet, dass die Benutzerzählung erfolgreich ist, Bestimmen (305), durch das Netzwerk-Slice-Auswahlnetzwerkelement, den Zugriff des Endgeräts auf den ersten Slice zuzulassen; oder
falls das Benutzerzählergebnis, das dem ersten Slice entspricht, lautet, dass die Benutzerzählung fehlschlägt, Bestimmen (306), durch das Netzwerk-Slice-Auswahlnetzwerkelement, den Zugriff des Endgeräts auf den ersten Slice abzulehnen, wobei, dass die Benutzerzählung erfolgreich ist, bedeutet, dass die Gesamtanzahl von Benutzern in dem ersten Slice plus 1 eine Maximalanzahl von Benutzern, die durch den ersten Slice zugelassen ist, nicht überschreitet,
wobei, dass die Benutzerzählung fehlschlägt, bedeutet, dass die Gesamtanzahl von Benutzern in dem ersten Slice plus 1 die Maximalanzahl von Benutzern, die durch den ersten Slice zugelassen ist, überschreitet,
wobei, falls das Slice-Authentifizierungsergebnis, das dem ersten Slice entspricht, lautet, dass die Slice-Authentifizierung fehlschlägt, Bestimmen (306), durch das Netzwerk-Slice-Auswahlnetzwerkelement, den Zugriff des Endgeräts auf das erste Slice abzulehnen,
wobei, vor dem Empfangen (303), durch das Netzwerk-Slice-Auswahlnetzwerkelement, eines Slice-Authentifizierungsergebnisses, das dem ersten Slice entspricht, von dem Mobilitätsverwaltungsnetzwerkelement, das Verfahren ferner umfasst:
Senden (301), durch das Netzwerk-Slice-Auswahlnetzwerkelement, von Anzeigeinformationen an das Mobilitätsverwaltungsnetzwerkelement, wobei die Anzeigeinformationen dem Mobilitätsverwaltungsnetzwerkelement anzeigen, das Slice-Authentifizierungsergebnis, das dem ersten Slice entspricht, an das Netzwerk-Slice-Auswahlnetzwerkelement zu senden,
wobei, vor dem Senden (301), durch ein Netzwerk-Slice-Auswahlnetzwerkelement, von Identifikationsinformationen eines ersten Slice an ein Mobilitätsverwaltungsnetzwerkelement, das Verfahren ferner umfasst:
Empfangen, durch das Netzwerk-Slice-Auswahlnetzwerkelement, von angeforderten Netzwerk-Slice-Auswahlunterstützungsinformation, NSSAI, von dem Mobilitätsverwaltungsnetzwerkelement, wobei die angeforderten NSSAI Identifikationsinformationen eines Slice, auf das das Endgerät den Zugriff anfordert, umfassen und die angeforderten NSSAI die Identifikationsinformationen des ersten Slice umfassen; und
Bestimmen, durch das Netzwerk-Slice-Auswahlnetzwerkelement, von zugelassenen NSSAI basierend auf den angeforderten NSSAI, wobei die zugelassenen NSSAI Identifikationsinformationen eines Slice, auf dem weder die Slice-Authentifizierung noch die Benutzerzählung durchgeführt werden muss, in den angeforderten NSSAI umfassen.

2. Verfahren nach einem der Ansprüche 1, das ferner umfasst:
Durchführen, durch das Netzwerk-Slice-Auswahlnetzwerkelement, der Benutzerzählung auf einem zweiten Slice, wobei der zweite Slice ein Slice ist, auf dem die Benutzerzählung durchgeführt werden muss, jedoch keine Slice-Authentifizierung durchgeführt werden muss; und
falls ein Benutzerzählergebnis, das dem zweiten Slice entspricht, lautet, dass die Benutzerzählung erfolgreich ist, Bestimmen, durch das Netzwerk-Slice-Auswahlnetzwerkelement, den Zugriff des Endgeräts auf das zweite Slice zuzulassen; oder
falls ein Benutzerzählergebnis, das dem zweiten Slice entspricht, lautet, dass die Benutzerzählung fehlschlägt, Bestimmen, durch das Netzwerk-Slice-Auswahlnetzwerkelement, den Zugriff des Endgeräts auf das zweite Slice abzulehnen.

3. Verfahren nach einem der Ansprüche 1 oder 2, das ferner umfasst:
Senden, durch das Netzwerk-Slice-Auswahlnetzwerkelement, von Identifikationsinformationen eines dritten Slice an das
Mobilitätsverwaltungsnetzwerkelement, wobei der dritte Slice ein Slice ist, auf dem die Slice-Authentifizierung durchgeführt werden muss, jedoch keine Benutzerzählung durchgeführt werden muss;
Empfangen, durch das Netzwerk-Slice-Auswahlnetzwerkelement, eines Slice-Authentifizierungsergebnisses, das dem dritten Slice entspricht, von dem Mobilitätsverwaltungsnetzwerkelement; und
falls das Slice-Authentifizierungsergebnis, das dem dritten Slice entspricht, lautet, dass die Slice-Authentifizierung erfolgreich ist, Bestimmen, durch das Netzwerk-Slice-Auswahlnetzwerkelement, den Zugriff des Endgeräts auf das dritte Slice zuzulassen;
oder
falls das Slice-Authentifizierungsergebnis, das dem dritten Slice entspricht, lautet, dass die Slice-Authentifizierung fehlschlägt, Bestimmen, durch das Netzwerk-Slice-Auswahlnetzwerkelement, den Zugriff des Endgeräts auf das dritte Slice abzulehnen.

4. Kommunikationseinrichtung, die Mittel, die konfiguriert sind, um das Verfahren nach einem der Ansprüche 1 bis 3 durchzuführen, umfasst.

5. Computerlesbares Speichermedium, wobei das computerlesbare Speichermedium ein Programm speichert, und, wenn das Programm durch einen Prozessor aufgerufen wird, das Verfahren nach einem der Ansprüche 1 bis 3 durchgeführt wird.

6. Computerprogramm, wobei, wenn das Computerprogramm durch einen Prozessor aufgerufen wird, das Verfahren nach einem der Ansprüche 1 bis 3 durchgeführt wird.

7. Kommunikationssystem, das ein Netzwerk-Slice-Auswahlnetzwerkelement (700) und ein Mobilitätsverwaltungsnetzwerkelement (800) umfasst, wobei das Netzwerk-Slice-Auswahlnetzwerkelement (700) konfiguriert ist zum: Senden von Identifikationsinformationen eines ersten Slice an das Mobilitätsverwaltungsnetzwerkelement, wobei der erste Slice ein Slice ist, auf dem sowohl die Slice-Authentifizierung als auch die Benutzerzählung durchgeführt werden müssen; Empfangen eines Slice-Authentifizierungsergebnisses, das dem ersten Slice entspricht, von dem Mobilitätsverwaltungsnetzwerkelement; falls das Slice-Authentifizierungsergebnis, das dem ersten Slice entspricht, lautet, dass die Slice-Authentifizierung erfolgreich ist, Durchführen der Benutzerzählung auf dem ersten Slice; und Bestimmen, basierend auf einem Benutzerzählergebnis, das dem ersten Slice entspricht, ob der Zugriff des Endgeräts auf das erste Slice zugelassen wird; und das Mobilitätsverwaltungsnetzwerkelement (800) konfiguriert ist zum: Empfangen der Identifikationsinformationen des ersten Slice von dem Netzwerk-Slice-Auswahlnetzwerkelement; Erhalten des Slice-Authentifizierungsergebnisses, das dem ersten Slice entspricht; und Senden des Slice-Authentifizierungsergebnisses, das dem ersten Slice entspricht, an das Netzwerk-Slice-Auswahlnetzwerkelement,
wobei das Bestimmen, durch das Netzwerk-Slice-Auswahlnetzwerkelement basierend auf einem Benutzerzählergebnis, das dem ersten Slice entspricht, ob der Zugriff eines Endgeräts auf den ersten Slice zugelassen wird, umfasst:
falls das Benutzerzählergebnis, das dem ersten Slice entspricht, lautet, dass die Benutzerzählung erfolgreich ist, Bestimmen, durch das Netzwerk-Slice-Auswahlnetzwerkelement, den Zugriff des Endgeräts auf das erste Slice zuzulassen; oder
falls das Benutzerzählergebnis, das dem ersten Slice entspricht, lautet, dass die Benutzerzählung fehlschlägt, Bestimmen, durch das Netzwerk-Slice-Auswahlnetzwerkelement, den Zugriff des Endgeräts auf den ersten Slice abzulehnen, wobei, dass die Benutzerzählung erfolgreich ist, bedeutet, dass die Gesamtanzahl von Benutzern in dem ersten Slice plus 1 eine Maximalanzahl von Benutzern, die durch den ersten Slice zugelassen ist, nicht überschreitet,
wobei, dass die Benutzerzählung fehlschlägt, bedeutet, dass die Gesamtanzahl von Benutzern in dem ersten Slice plus 1 die Maximalanzahl von Benutzern, die durch den ersten Slice zugelassen ist, überschreitet,
wobei, falls das Slice-Authentifizierungsergebnis, das dem ersten Slice entspricht, lautet, dass die Slice-Authentifizierung fehlschlägt, Bestimmen, durch das Netzwerk-Slice-Auswahlnetzwerkelement, den Zugriff des Endgeräts auf das erste Slice abzulehnen,
wobei, vor dem Empfangen, durch das Netzwerk-Slice-Auswahlnetzwerkelement,
eines Slice-Authentifizierungsergebnisses, das dem ersten Slice entspricht, von dem Mobilitätsverwaltungsnetzwerkelement, das Netzwerk-Slice-Auswahlnetzwerkelement konfiguriert ist, um Anzeigeinformationen an das Mobilitätsverwaltungsnetzwerkelement zu senden, wobei die Anzeigeinformationen dem Mobilitätsverwaltungsnetzwerkelement anzeigen, das Slice-Authentifizierungsergebnis, das dem ersten Slice entspricht, an das Netzwerk-Slice-Auswahlnetzwerkelement zu senden,
wobei, vor dem Senden, durch ein Netzwerk-Slice-Auswahlnetzwerkelement, von Identifikationsinformationen eines ersten Slice an ein Mobilitätsverwaltungsnetzwerkelement, das Netzwerk-Slice-Auswahlnetzwerkelement konfiguriert ist, um angeforderte Netzwerk-Slice-Auswahlunterstützungsinformationen, NSSAI, von dem Mobilitätsverwaltungsnetzwerkelement zu empfangen, wobei die angeforderten NSSAI Identifikationsinformationen eines Slice, auf das das Endgerät den Zugriff anfordert, umfassen und die angeforderten NSSAI die Identifikationsinformationen des ersten Slice umfassen; und
das Netzwerk-Slice-Auswahlnetzwerkelement konfiguriert ist, um zugelassene NSSAI basierend auf den angeforderten NSSAI zu bestimmen, wobei die zugelassenen NSSAI Identifikationsinformationen eines Slice, auf dem weder die Slice-Authentifizierung noch die Benutzerzählung durchgeführt werden muss, in den angeforderten NSSAI umfassen.

## Revendications

1. Procédé de communication, comprenant :
l'envoi (301), par un élément de réseau de sélection de tranche de réseau,
d'informations d'identification d'une première tranche à un élément de réseau de gestion de mobilité, dans lequel la première tranche est une tranche sur laquelle à la fois une authentification de tranche et un comptage d'utilisateurs doivent être réalisés ;
la réception (303), par l'élément de réseau de sélection de tranche de réseau, d'un résultat d'authentification de tranche correspondant à la première tranche de la part de l'élément de réseau de gestion de mobilité ;
si le résultat d'authentification de tranche correspondant à la première tranche est que l'authentification de la tranche réussit, la réalisation (304), par l'élément de réseau de sélection de tranche de réseau, du comptage d'utilisateurs sur la première tranche ; et
le fait de déterminer (305), par l'élément de réseau de sélection de tranche de réseau sur la base d'un résultat de comptage d'utilisateurs correspondant à la première tranche, s'il faut autoriser l'accès d'un dispositif terminal à la première tranche,
dans lequel le fait de déterminer (305), par l'élément de réseau de sélection de tranche de réseau sur la base d'un résultat de comptage d'utilisateurs correspondant à la première tranche, s'il faut autoriser l'accès d'un dispositif terminal à la première tranche comprend :
si le résultat de comptage d'utilisateurs correspondant à la première tranche est que le comptage d'utilisateurs réussit, la détermination (305), par l'élément de réseau de sélection de tranche de réseau, de l'autorisation d'accès du dispositif terminal à la première tranche ; ou
si le résultat de comptage d'utilisateurs correspondant à la première tranche est que le comptage d'utilisateurs échoue, la détermination (306), par l'élément de réseau de sélection de tranche de réseau, du rejet de l'accès du dispositif terminal à la première tranche,
dans lequel le fait que le comptage d'utilisateurs réussit signifie que la quantité totale d'utilisateurs dans la première tranche plus 1 ne dépasse pas une quantité maximale d'utilisateurs autorisée par la première tranche,
dans lequel le fait que le comptage d'utilisateurs échoue signifie que la quantité totale d'utilisateurs dans la première tranche plus 1 dépasse la quantité maximale d'utilisateurs autorisée par la première tranche,
dans lequel, si le résultat d'authentification de tranche correspondant à la première tranche est que l'authentification de tranche échoue, la détermination (306), par l'élément de réseau de sélection de tranche de réseau, du rejet de l'accès du dispositif terminal à la première tranche,
dans lequel, avant la réception (303), par l'élément de réseau de sélection de tranche de réseau, d'un résultat d'authentification de tranche correspondant à la première tranche de la part de l'élément de réseau de gestion de mobilité, le procédé comprend en outre :
l'envoi (301), par l'élément de réseau de sélection de tranche de réseau,
d'informations d'indication à l'élément de réseau de gestion de mobilité, dans lequel les informations d'indication indiquent à l'élément de réseau de gestion de mobilité d'envoyer le résultat d'authentification de tranche correspondant à la première tranche à l'élément de réseau de sélection de tranche de réseau,
dans lequel, avant l'envoi (301), par un élément de réseau de sélection de tranche de réseau, d'informations d'identification d'une première tranche à un élément de réseau de gestion de mobilité, le procédé comprend en outre :
la réception, par l'élément de réseau de sélection de tranche de réseau, d'informations d'aide à la sélection de tranche de réseau, NSSAI, demandées de la part de l'élément de réseau de gestion de mobilité, dans lequel les NSSAI demandées comprennent des informations d'identification d'une tranche à laquelle le dispositif terminal demande à accéder, et les NSSAI demandées comprennent les informations d'identification de la première tranche ; et
la détermination, par l'élément de réseau de sélection de tranche de réseau, des NSSAI autorisées sur la base des NSSAI demandées, dans lequel les NSSAI autorisées comprennent des informations d'identification d'une tranche sur laquelle ni une authentification de tranche, ni un comptage d'utilisateurs ne doivent être réalisés dans les NSSAI demandées.

2. Procédé selon l'une quelconque des revendications 1, comprenant en outre :
la réalisation, par l'élément de réseau de sélection de tranche de réseau, de comptage d'utilisateurs sur une deuxième tranche, dans lequel la deuxième tranche est une tranche sur laquelle un comptage d'utilisateurs doit être réalisé mais une authentification de tranche ne doit pas être réalisée ; et
si un résultat de comptage d'utilisateurs correspondant à la deuxième tranche est que le comptage d'utilisateurs réussit, la détermination, par l'élément de réseau de sélection de tranche de réseau, de l'autorisation de l'accès du dispositif terminal à la deuxième tranche ; ou
si un résultat de comptage d'utilisateurs correspondant à la deuxième tranche est que le comptage d'utilisateurs échoue, la détermination, par l'élément de réseau de sélection de tranches de réseau, du rejet de l'accès du dispositif terminal à la deuxième tranche.

3. Procédé selon l'une quelconque des revendications 1 ou 2, comprenant en outre :
l'envoi, par l'élément de réseau de sélection de tranche de réseau, d'informations d'identification d'une troisième tranche à l'élément de réseau de gestion de mobilité, dans lequel la troisième tranche est une tranche sur laquelle une authentification de tranche doit être réalisée mais un comptage d'utilisateurs ne doit pas être réalisé ;
la réception, par l'élément de réseau de sélection de tranche de réseau, d'un résultat d'authentification de tranche correspondant à la troisième tranche de la part de l'élément de réseau de gestion de mobilité ; et
si le résultat d'authentification de tranche correspondant à la troisième tranche est que l'authentification de tranche réussit, la détermination, par l'élément de réseau de sélection de tranche de réseau, de l'autorisation de l'accès du dispositif terminal à la troisième tranche ; ou
si le résultat d'authentification de tranche correspondant à la troisième tranche est que l'authentification de tranche échoue, la détermination, par l'élément de réseau de sélection de tranche de réseau, du rejet de l'accès du dispositif terminal à la troisième tranche.

4. Appareil de communication, comprenant un moyen configuré pour réaliser le procédé selon l'une quelconque des revendications 1 à 3.

5. Support de stockage lisible par ordinateur, dans lequel le support de stockage lisible par ordinateur stocke un programme, et lorsque le programme est appelé par un processeur, le procédé selon l'une quelconque des revendications 1 à 3 est réalisé.

6. Programme informatique, dans lequel lorsque le programme informatique est appelé par un processeur, le procédé selon l'une quelconque des revendications 1 à 3 est réalisé.

7. Système de communication, comprenant un élément de réseau de sélection de tranche de réseau (700) et un élément de réseau de gestion de mobilité (800), dans lequel l'élément de réseau de sélection de tranche de réseau (700) est configuré pour : envoyer des informations d'identification d'une première tranche à l'élément de réseau de gestion de mobilité, dans lequel la première tranche est une tranche sur laquelle à la fois une authentification de tranche et un comptage d'utilisateurs doivent être réalisés ;
recevoir un résultat d'authentification de tranche correspondant à la première tranche de la part de l'élément de réseau de gestion de mobilité ; si le résultat d'authentification de tranche correspondant à la première tranche est que l'authentification de la tranche réussit, réaliser un comptage d'utilisateurs sur la première tranche ; et déterminer, sur la base d'un résultat de comptage d'utilisateurs correspondant à la première tranche, s'il faut autoriser un accès du dispositif terminal à la première tranche ; et
l'élément de réseau de gestion de mobilité (800) est configuré pour : recevoir les informations d'identification de la première tranche de la part de l'élément de réseau de sélection de tranche de réseau ; obtenir le résultat d'authentification de tranche correspondant à la première tranche ; et envoyer le résultat d'authentification de tranche correspondant à la première tranche à l'élément de réseau de sélection de tranche de réseau ;
dans lequel le fait de déterminer, par l'élément de réseau de sélection de tranche de réseau sur la base d'un résultat de comptage d'utilisateurs correspondant à la première tranche, s'il faut autoriser un accès d'un dispositif terminal à la première tranche comprend :
si le résultat de comptage d'utilisateurs correspondant à la première tranche est que le comptage d'utilisateurs réussit, la détermination, par l'élément de réseau de sélection de tranche de réseau, de l'autorisation d'un accès du dispositif terminal à la première tranche ; ou
si le résultat de comptage d'utilisateurs correspondant à la première tranche est que le comptage d'utilisateurs échoue, la détermination, par l'élément de réseau de sélection de tranche de réseau, du rejet de l'accès du dispositif terminal à la première tranche,
dans lequel le fait que le comptage d'utilisateurs réussit signifie que la quantité totale d'utilisateurs dans la première tranche plus 1 ne dépasse pas une quantité maximale d'utilisateurs autorisée par la première tranche,
dans lequel le fait que le comptage d'utilisateurs échoue signifie que la quantité totale d'utilisateurs dans la première tranche plus 1 dépasse la quantité maximale d'utilisateurs autorisée par la première tranche,
dans lequel, si le résultat d'authentification de tranche correspondant à la première tranche est que l'authentification de tranche échoue, la détermination, par l'élément de réseau de sélection de tranche de réseau, du rejet de l'accès du dispositif terminal à la première tranche,
dans lequel, avant la réception, par l'élément de réseau de sélection de tranche de réseau, d'un résultat d'authentification de tranche correspondant à la première tranche de la part de l'élément de réseau de gestion de mobilité, l'élément de réseau de sélection de tranche de réseau est configuré pour envoyer des informations d'indication à l'élément de réseau de gestion de mobilité, dans lequel les informations d'indication indiquent à l'élément de réseau de gestion de mobilité d'envoyer le résultat d'authentification de tranche correspondant à la première tranche à l'élément de réseau de sélection de tranche de réseau,
dans lequel, avant l'envoi, par un élément de réseau de sélection de tranche de réseau, d'informations d'identification d'une première tranche à un élément de réseau de gestion de mobilité, l'élément de réseau de sélection de tranche de réseau est configuré pour recevoir des informations d'aide à la sélection de tranche de réseau, NSSAI, demandées de la part de l'élément de réseau de gestion de mobilité, dans lequel les NSSAI demandées comprennent des informations d'identification d'une tranche à laquelle le dispositif terminal demande à accéder, et les NSSAI demandées comprennent les informations d'identification de la première tranche ; et
l'élément de réseau de sélection de tranche de réseau est configuré pour déterminer des NSSAI autorisées sur la base des NSSAI demandées, dans lequel les NSSAI autorisées comprennent des informations d'identification d'une tranche sur laquelle ni une authentification de tranche, ni un comptage d'utilisateurs ne doivent être réalisés dans les NSSAI demandées.
